(19) Europäisches Patentamt
European Patent Office
Office européen des brevets

(11) **EP 4 516 628 A1**

(12) **EUROPEAN PATENT APPLICATION**
published in accordance with Art. 153(4) EPC

(43) Date of publication:
**05.03.2025 Bulletin 2025/10**

(21) Application number: **23796557.9**

(22) Date of filing: **28.04.2023**

(51) International Patent Classification (IPC):
***B61L 27/60*** (2022.01)  ***B60L 3/00*** (2019.01)
***G01M 17/08*** (2006.01)  ***G06Q 10/30*** (2023.01)

(52) Cooperative Patent Classification (CPC):
**B60L 3/00; B61L 27/60; G01M 17/08; G06Q 10/30**

(86) International application number:
**PCT/JP2023/016960**

(87) International publication number:
**WO 2023/210825 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 JP 2022075515**

(71) Applicant: **Hitachi, Ltd.**
**Tokyo 100-8280 (JP)**

(72) Inventors:
• **SHIMADA, Motomi**
**Tokyo 100-8280 (JP)**
• **KISHIMOTO, Noriki**
**Tokyo 100-8280 (JP)**
• **NAKATA, Kiyoshi**
**Tokyo 100-8280 (JP)**
• **KANEKO, Takashi**
**Tokyo 100-8280 (JP)**
• **SUZUKI, Akira**
**Tokyo 100-8280 (JP)**
• **HATA, Kunihiko**
**Tokyo 100-8280 (JP)**

(74) Representative: **Mewburn Ellis LLP**
**Aurora Building**
**Counterslip**
**Bristol BS1 6BX (GB)**

(54) **RAILWAY UPCYCLE SYSTEM, METHOD OF SAME, AND GENERATION METHOD BY SAME**

(57) According to the present invention, a controller: configures a first digital twin model which belongs to a railway system and simulates a subject to be value-improved; adjusts parameters of the first digital twin model by fetching operation data of the subject; configures a second digital twin model which simulates a subject to be updated when the value of the subject is improved by improving the accuracy of the first digital twin model; and enables evaluation for value improvement by comparing the simulation results when the first digital twin model and the second digital twin model operate under the same condition. Therefore, a railway upcycle system is provided which can improve the performance of an upcycle target, such as a facility or software related to the railway system, over that of existing specifications by accurately determining whether upcycling is right, and in addition, repetitively execute this performance improvement.

FIG. 1

EP 4 516 628 A1

## Description

Technical Field

The present invention relates to a railway upcycle system, a method of the same, and a generation method by the same.

Background Art

In recent years, there has been a movement toward a sustainable society in which a global environment is not destroyed, resources are not overused, and future generations can continue affluent life. Upcycle is part of the movement and in upcycle, the performance of a targeted product (hereafter, also referred to as "target product" or "target") is wholly improved and the life thereof is lengthened to reduce wastes. Even the reduced wastes are recycled and the quality thereof is altered to transform the wastes to a circulatable product that continuously conserves environments. A technology that enhances the value of a product or the like as mentioned above is demanded.

It is known that value cited here can be classified into environmental value, economic value, and social value. Examples of environmental value include, aside from resource circulation, low energy consumption, low noise, low vibration, and the like in the field of railway system. Examples of economic value include, aside from low cost, small size and light weight, safety, usability from users' point of view, accessibility, and the like in the field of railway system. Social value is considered to be a goal to be aimed at together with realization of environmental value and economic value and SDGs (Sustainable Development Goals) and the like are known as social value.

Patent Literature 1 describes a system that: acquires field performance data of a subsystem of a car monitored by a sensor mounted in the car in operation; and determines a performance compound index of the subsystem of the car based on dispersion between simulated performance data and the field performance data. The literature describes that based on performance compound index, a car in operation or in subsequent operation is controlled and that based on a health score, preventive maintenance of a car is automatically scheduled.

Nonpatent Literature 1 describes robust adhesion control that appropriately follows a momentarily changing adhesion state by applying the frame of the Taguchi Method to parameter designing of adhesion control (the Taguchi Method is a stabilization designing technique in which, to exclude various quality variations produced in the manufacture of a product, those variations are accepted in the stage of designing to prevent variations from being produced in the functions of the actual product).

Citation List

Patent Literature

Patent Literature 1: US 2018/0257683A1

Nonpatent Literature

Nonpatent Literature 1: "Robust Adhesion Control", the 41st Cybernetics Utilization Symposium in Railway Proceedings, Paper No. 518 (2004-11)

Summary of Invention

Technical Problem

To provide new values (functionality, performance, life, etc.) of a circulatable product and continuously use the product, it is required to make it possible to, with respect to modularized devices and components, manage and track such data as use history and quality information at the level of product and material. Meanwhile, the field of railway is operated in an economic model of linear type of procurement -> production -> use -> discard or recycle type in which some products and materials are recycled but wastes are permitted; and in the field of railway, a structure in which use history and quality information can be tracked at the level of product or material has not been established.

With respect to a software function, to enhance the performance of control, final parameter adjustment and performance check are conventionally made in an actual car environment. In an actual car environment, however, route conditions, passenger load conditions, meteorological conditions momentarily change. Realization of such a simulation car environment as a simulator is demanded in which simulation car environment, an operating state in an actual car environment can be repeatedly reproduced, a large number of parameters can be adjusted according to changes and control performance can be converged to stability, and up to determination of application to an actual car can be completed.

As mentioned above, in a conventional railway system, whether to upcycle used to be difficult to determine and it used to be difficult to smoothly implement continuous upcycling. It is an object of the present invention to provide a railway upcycle system in which a correct determination can be made about whether to upcycle, and thus with respect to such upcycle targets as equipment, software, and the like related to a railway system, specification performance can be enhanced as compared with conventional specification performances and further, such performance enhancement can be repeatedly implemented.

Solution to Problem

To solve the above problem, the present invention is a railway upcycle system including a controller and a memory; the controller and the memory construct a digital twin environment for simulating a railway system; and enhancement of the value of the railway system is implemented according to a program in the memory. The controller: configures a first digital twin model that simulates a target of value enhancement belonging to the railway system, fetches operation data of the target to adjust a parameter of the first digital twin model; configures a second digital twin model that simulates an update target when the accuracy of the first digital twin model is enhanced and the value of the target is enhanced; compares results of simulations obtained when the first digital twin model and the second digital twin model are operated under identical conditions and thereby enables evaluation of the value enhancement. Advantageous Effects of Invention

According to the present invention, a railway upcycle system can be provided in which railway upcycle system, whether to upcycle can be correctly determined, and thus, the specification performance of such upcycle targets as equipment, software, and the like related to a railway system can be enhanced as compared with conventional specification performances and further, such performance enhancement can be repeatedly implemented.

Brief Description of Drawings

FIG. 1 is a block diagram illustrating a concept of parallel analysis in a railway upcycle system (hereafter, referred to as "present upcycle system") according to a first embodiment of the present invention.

FIG. 2 is a functional block diagram illustrating a basic operation of the present upcycle system in FIG. 1.

FIG. 3 is a functional block diagram illustrating an example of a basic operation (simulation car model update) of the present upcycle system in FIG. 1.

FIG. 4 is a functional block diagram illustrating an example of a basic operation (actual car control update) of the present upcycle system in FIG. 1.

FIG. 5 is a schematic explanatory drawing illustrating an example of an information transmission unit 3 of the present upcycle system in FIG. 1.

FIG. 6 is a conceptual explanatory drawing explaining a circulation system of a storage battery according to a railway upcycle system (also referred to as "present upcycle system) according to a second embodiment of the present invention.

FIG. 7 is a schematic explanatory drawing explaining parameter identification in the circulation system in FIG. 6.

FIG. 8 is a flowchart explaining a procedure for the parameter identification in FIG. 7.

FIG. 9 is a schematic explanatory drawing explaining upcycle evaluation in the circulation system in FIG. 6.

FIG. 10 is a flowchart explaining a procedure for the upcycle evaluation in FIG. 9.

FIG. 11 is a schematic explanatory drawing explaining parameter identification (after upcycle) in the circulation system in FIG. 6.

FIG. 12 is a flowchart explaining a procedure for parameter identification (after upcycle) in FIG. 11.

FIG. 13 is a schematic explanatory drawing explaining maintenance determination in the circulation system in FIG. 6.

FIG. 14 is a flowchart explaining a procedure for the maintenance determination in FIG. 13.

FIG. 15 is a conceptual explanatory drawing explaining a maintenance plan proposing function in addition to a data management function for product and material in the present upcycle system.

FIG. 16 is a functional block diagram illustrating a configuration of a modification in which the actual cars 11a, 11b in FIG. 5 are coupled into one train set.

FIG. 17 is a functional block diagram illustrating in more detail a configuration of the actual car 11a in FIG. 16.

FIG. 18 is a drawing illustrating an example of an ID system defining the traceability of hardware/software of the parallel analysis system in FIG. 1.

FIG. 19 is a conceptional explanatory drawing explaining a circulation system of a storage battery based on an upcycle system in a third embodiment.

FIG. 20 is a schematic explanatory drawing illustrating another example of the information transmission unit 3 shown in FIG. 5.

FIG. 21 is a block diagram illustrating a configuration of a drive system of an actual car 11 obtained when the main circuit storage battery 123 in FIG.17 is composed of a plurality of storage battery systems.

FIG. 22 is a drawing illustrating an internal configuration of a storage battery system.

FIG. 23(a) is a drawing illustrating a configuration of a controller that collects data from a storage battery system; FIG. 23(b) is a drawing illustrating required data required as a quality data of a storage battery.

FIG. 24 is a drawing illustrating an example of an ID system that enables traceability in the third embodiment.

FIG. 25 is a drawing illustrating an example of an ID system that enables traceability in the third embodiment.

FIG. 26 is a step diagram illustrating a maintenance and replacement process for a storage battery system.

FIG. 27 is a flowchart illustrating a maintenance and replacement process for a storage battery system.

FIG. 28 is a drawing illustrating a configuration of a model (simulation model) that simulates a charging/discharging operation of a storage battery system. Description of Embodiments

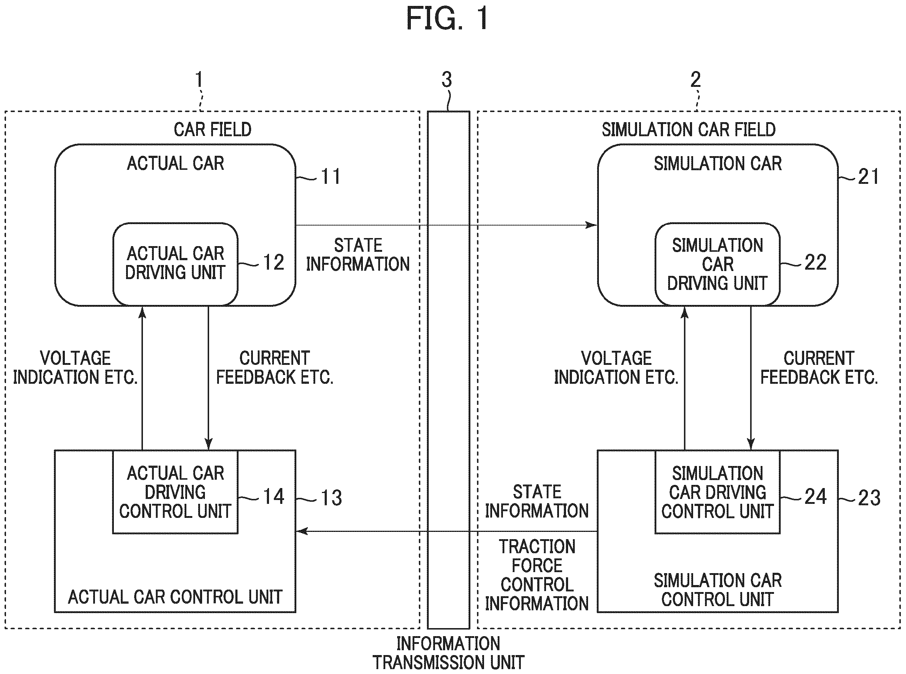

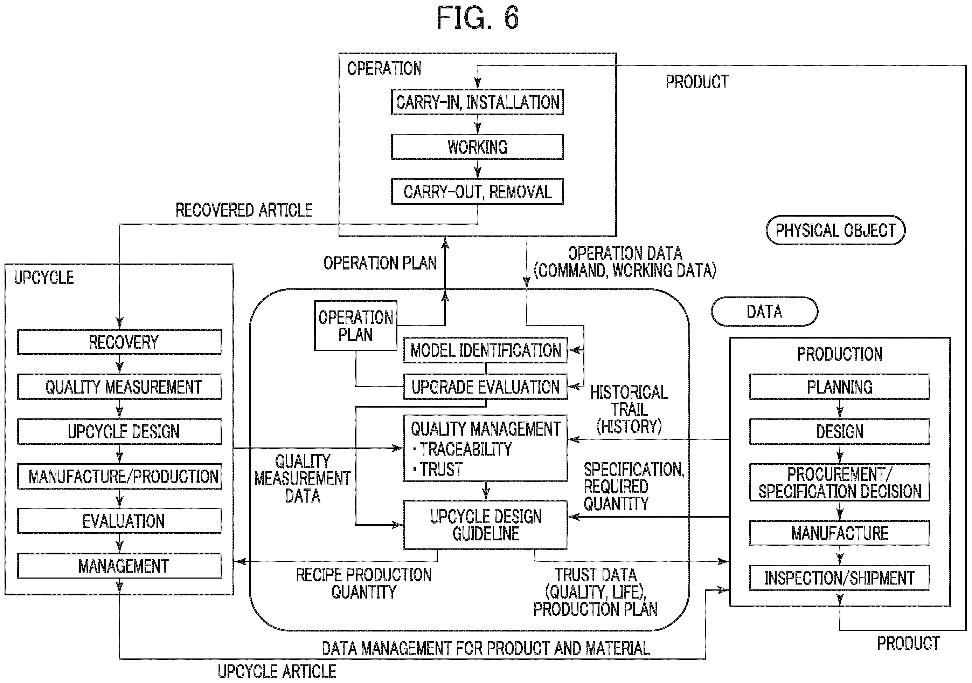

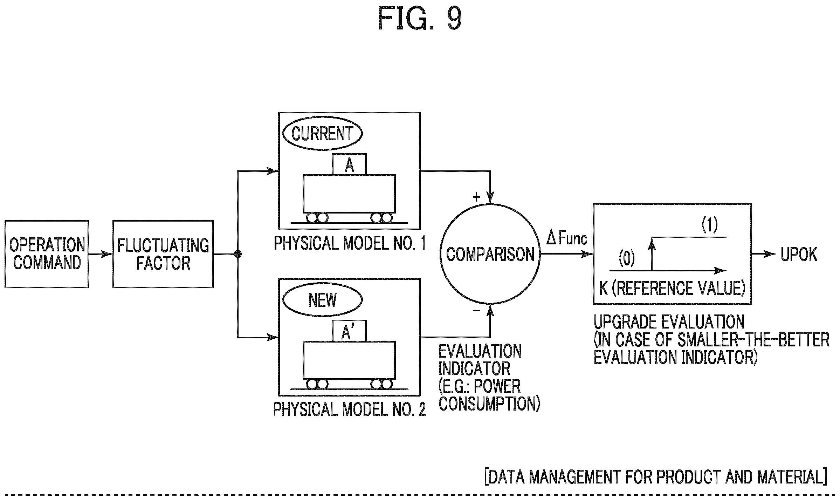

Hereafter, a description will be given to a present upcycle system according to embodiments of the present invention with reference to the drawings. A description will be given mainly to a first embodiment related to software with reference to FIG. 1 to FIG. 5 and mainly to a second embodiment related to hardware (physical object) with reference to FIG. 6 to FIG. 18. In all the drawings, parts that bring about an identical effect will be marked with identical reference signs and an overlapped description will be omitted. In FIG. 6, a relation between individual elements is also shown based on described words and phrases; therefore, reference signs will be omitted. Similarly, reference signs will be omitted in FIG. 9, FIG. 11, FIG. 13, FIG. 15, and FIG. 18.

In relation to the embodiments, a description will be given to a railway upcycle system or a railway upcycle method in which a controller and a memory are provided; the controller and the memory build a digital twin environment that simulates the railway system; and the enhancement of the value of the railway system is implemented according to a program in the memory. The controller: configures a first digital twin model that simulates a target of value enhancement belonging to the railway system; fetches operation data of the target to adjust a parameter of the first digital twin model; configures a second digital twin model that simulates a target of update obtained when the accuracy of the first digital twin model is enhanced and the value of the target is enhanced; and compares results of simulations obtained when the first digital twin model and the second digital twin model are operated under identical conditions and thereby enables evaluation of the value enhancement. A description will be given to a railway upcycle generation method for using the railway upcycle system or the railway upcycle method to generate a railway system with the target's value enhanced.

In relation to the embodiments, a description will be given to that one or more functions included in an already identified existing digital twin model are updated with a new function to obtain a new digital twin model.

In relation to the embodiments, a description will be given to that a target belonging to a railway system and a digital twin model corresponding thereto are supplied with a common ID and operation data is associated with the ID.

In relation to the embodiments, a description will be given to that operation data used for the adjustment of a parameter of a digital twin model contains train operation information, traffic control or operating manipulation, train configuration information, or car equipment operation.

In relation to the embodiments, a description will be given to that: operation data used for the adjustment of a parameter of a digital twin model contains frequency, input/output current/voltage, or power unit temperature when a target is a drive control device; frequency, input/output current/voltage, power unit temperature when a target is an auxiliary power supply control device; charge/discharge current, voltage, SOC, SOH, or temperature when a target is a storage battery; a state of each piece of equipment, vehicle occupancy, or temperature/room temperature when a target is a train control management system; and vibration, temperature, or distortion when a target is a member of a car.

In relation to the embodiment, a description will be given to that: after it is determined that operation data of a target belonging to a railway system does not contain abnormality data caused by an accident or a failure, a parameter of a digital twin model is adjusted.

In relation to the embodiments, a description will be given to that: performance degradation is grasped by a time calendar-based simulation to predict performance deterioration timing and value enhancement timing is determined and proposed before deterioration of a target belonging to a railway system begins.

In relation to the embodiment, a description will be given to that: for operation data of a target belonging to a railway system, data of operation utilizing an automatic operation or a driver advisory system is used. A description will be given to that: an operation patten required for the adjustment of a digital twin model is defined in advance for at least either of an operation profile of an automatic operation and an operation profile of a driver advisory system.

In relation to the embodiments, a description will be given to that: evaluation of value enhancement is enabled by comparing simulation results with also other varying data than operation data of an actual car inputted.

In relation to the embodiments, a target of value enhancement is any of actual car, storage battery, drive control device, auxiliary power supply control device, fuel cell system, air conditioner, cab monitoring device, train control management system, passenger information system, seat, member of car, front monitoring device, safety monitoring device, driver advisory system, automatic operation control function, or ground-on board radio information transmission control function.

In relation to the embodiments, a description will be given to that: a target belonging to a railway system is supplied with ID used for individual recognition; a record chart is associated with the ID; and the record chart is updated according to the same contents of implemented work as changing work data.

In relation to the embodiments, a description will be given to that: a parameter of control software is automatically adjusted on a digital twin model based on operation data and the automatically adjusted software is activated in accordance with a predetermined trigger. A description will be given to that: an automatically adjusted parameter of control software is adhesion control, front monitoring sensitivity, driver advisory system profile, automatic train control profile, hybrid energy management, storage battery current restriction, storage battery SOC range restriction, tractive force control by acceleration restriction, air brake blending control, or equipment operation change-over point information.

First Embodiment

Here, control software for electric rail car drive system is taken as an example of an upcycle target related to railway; however, a control software for such on-board equipment as operation management system, car information control system, automatic operation system, and the like is also included. As an example of the first embodiment, a parallel analysis system (Refer to FIG. 1) that predicts an operation of a railway car drive control system and optimizes control is taken. That is, the present upcycle system that verifies merit and demerit obtained when software implementing the railway car drive control system is updated and determines the validity of the update (upcycle) will be taken as an example.

That is, when a digital twin simulating a situation of an actual car in a real space is caused to simulate railway car drive control so as to keep the drive control in a most suitable state corresponding to route conditions, passenger load conditions, meteorological conditions and it is determined as a result of the simulation that upcycle will bring about an outcome, the present upcycle system performs the processing. Search for a stability control parameter is preferably a procedure for searing for and determining a stability control parameter in a simulation environment or the like that implements an environment close to an actual car 11 as much as possible.

The railway car drive control system controls a torque of a traction motor 117 mounted in a motor car, among a motor car and a trailer constituting a train, with a main traction converter mounted in the identical car or a nearby car and thereby drives the train.

In general, torque control of the traction motor 117 is implemented by software that is functionally designed so as to satisfy such predetermined car performance as acceleration characteristics and deceleration characteristics based on mechanical/mechanical characteristics of the traction motor 117, a drive system specification (wheel diameter, gear ratio, etc.), an equipment specification, such as a car specification (car mass, running resistance, load, etc.), and a car specification and installed in a controller of the main traction converter.

As mentioned above, software of the main traction converter implementing car performance is functionally designed based on equipment and car specifications. That car performance implemented by the designed software satisfies predetermined performance is finally verified by a running test using an actual car 11.

When an equipment or car specification is completely equivalent to that of the actual car 11, in a running test, it only has to be verified that the designed car performance satisfies the predetermined performance. In reality, however, a specification difference is present between equipment or car specifications and those of the actual car 11 to a certain extent without exception.

In equipment specifications, variation is present due to a characteristic constant of the traction motor 117, temperature change therein, or on-board wiring length thereof. Also, with respect to equipment efficiency, a design value and a measured value do not completely agree with each other. With respect to car specifications, a manufacturing error is present between a design value and a measured value of car mass without exception. The running resistance of an actual car 11 largely differs depending on a body shape; however, in designing, a running resistance formula according to the JIS standard and the like is applied, in actuality, both values do not necessarily agree with each other.

As mentioned above, car performance designed based on ideal equipment specifications and car specifications is different from that of an actual car 11. For this reason, in a running test of an actual car 11, a difference therebetween must be recognized and control must be adjusted so as to obtain predetermined performance.

As car performance requiring adjustment, train performance (including evaluation in rainy weather (a rail surface is wet)) of acceleration, deceleration, and the like is important. With respect to the basic control of the traction motor 117 driven by vector control or the like, a difference between a design value and a measured value of traction motor characteristic constant has influence on stability; therefore, control adjustment is required in an actual car 11.

With respect to influence of a higher harmonic return wire current or EMC (Electro-Magnetic Compatibility) on signal equipment, control adjustment in an actual car 11 may be required sometimes. An example of control adjustment in an actual car 11 is "Robust Adhesion Control" described in Nonpatent Literature 1. As the "Robust Adhesion Control", adhesion control is disclosed in which adhesion control, wheel slip caused by wheel tread force transmitted from a wheel to a rail based on motor torque of railway car exceeding a frictional limit between a wheel and a rail in rainy weather or the like is suppressed by reducing the wheel tread force.

This adhesion control performs the Taguchi Method for searching for stability control parameter with which wheel tread force is stably transmitted against fluctuation in frictional limit in a rainy state or the like and a performance validation by an actual car 11 to which the stability control parameter is applied. In general, slip in acceleration is discriminately referred to as wheel slip and that in deceleration is discriminately referred to as skid but they are collectively referred to as "wheel slip" here.

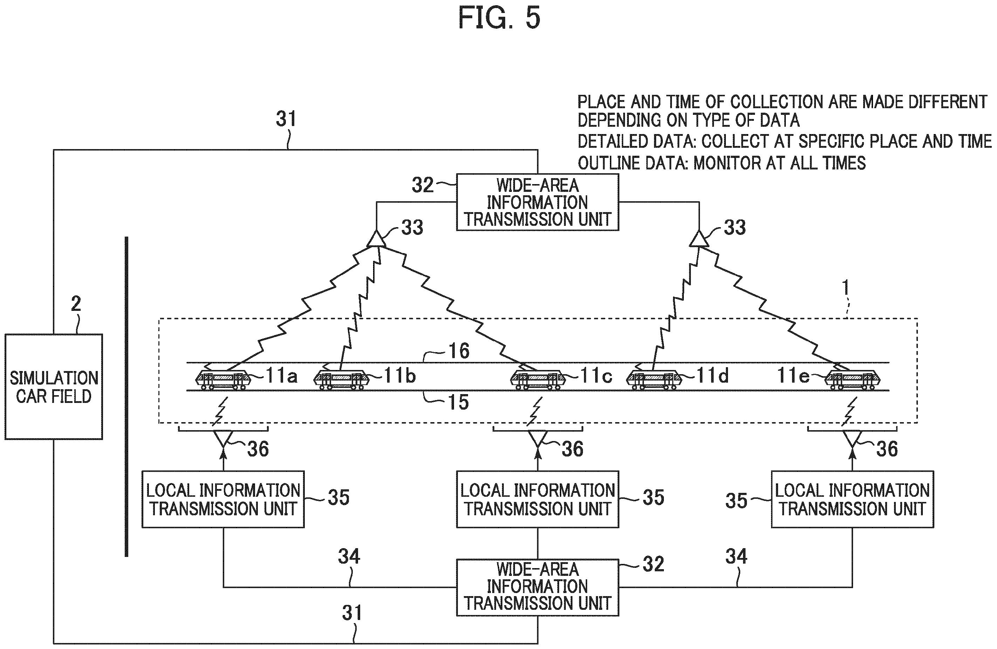

FIG. 1 is a block diagram illustrating the concept of parallel analysis in the present upcycle system. In the present upcycle system, an actual car field 1 is an environment provided with facilities required for running of an actual car 11 and include, in addition to at least the actual car 11, a rail 15 (FIG. 5, FIG. 6), not shown, such as a railway tack. When the actual car 11 is electric rolling stock that runs on electric power supplied from outside the car, a power supply unit 16 (FIG. 5, FIG. 6), such as overhead contact line or third rail, that supplies the car 11 with electric power is provided.

The actual car 11 includes an actual car driving unit 12 constituted of a motor that drives itself, an inverter device, and the like. The actual car driving unit 12 may be sometimes provided with a power storage unit that temporarily stores regenerative electric power generated by the motor during braking or generated power of a fuel cell, an engine, or the like and timely supplies the power to the motor to obtain driving force.

An actual car control unit 13 monitors the conditions of each part constituting the above-mentioned actual car 11 and controls an operation thereof. The actual car driving unit 12 and an actual car driving control unit 14 are provided with an interface that communicates information required for driving control therebetween. As communicated information, the actual car driving control unit 14 outputs mainly a PWM signal $V_p$ that turns on/off a switching circuit of the inverter device constituting the actual car driving unit 12. As a result of inputting a PWM signal $V_p$ to control the switching circuit, the actual car driving unit 12 outputs at least a motor current $I_m$ passed through the motor and an input voltage $E_c f$ of the switching circuit and inputs them to a simulation car driving control unit 24.

A simulation car field 2 is an environment provided with facilities required for running of a simulation car 21 and includes, in addition to at least the simulation car 21, a rail 15 (FIG. 5, FIG. 6), such as a railway tack. When the simulation car 21 is electric rolling stock that runs on electric power supplied from outside the car, the power supply unit 16 (FIG. 5, FIG. 6), such as overhead contact line or third rail, that supplies the car 11 with electric power is provided. As mentioned above, in the simulation car field 2, the actual car 11 in the actual car field 1 is replaced with the simulation car 21. The simulation car field is so constituted that the actual car driving unit 12 is similarly replaced with a simulation car driving unit 22; the actual car control unit 13 is replaced with a simulation car control unit 23; and the actual car driving control unit 14 is replaced with a simulation car driving control unit 24.

The simulation car 21, simulation car driving unit 22, simulation car control unit 23, and simulation car driving control unit 24 constituting the simulation car field 2 are simulators on a computer; however, Hardware in the Loop Simulator may also be implemented in which Hardware in the Loop Simulator, the actual car 11 is substituted for the simulation car 21; the actual car driving unit 12 is substituted for the simulation car driving unit 22; the actual car control unit 13 is substituted for the simulation car control unit 23; the actual car driving control unit 14 is substituted for the simulation car driving control unit 24, or any or a plurality of units are replaced with real units. In this example, the actual car field 1 and the simulation car field 2 operate on an identical time scale but the absolute times at which both the fields operate need not be identical.

The simulation car 21 includes the simulation car driving unit 22 constituted of a motor that drives itself, an inverter device, and the like. The simulation car driving unit 22 may be sometimes provided with a power storage unit that temporarily stores regenerative electric power generated by the motor during braking or generated power of a fuel cell, an engine, or the like and timely supplies the power to the motor to obtain driving force.

The simulation car control unit 23 monitors the conditions of each part constituting the above-mentioned simulation car 21 and controls an operation thereof. The simulation car driving unit 22 and the simulation car driving control unit 24 are provided with an interface that communicates information required for driving control therebetween. As communicated information, the simulation car driving control unit 24 outputs mainly a PWM signal $V_p$ that turns on/off a switching circuit of the inverter device constituting the simulation car driving unit 22. As a result of inputting a PWM signal $V_p$ to control the switching circuit, the simulation car driving unit 22 outputs at least a motor current $I_m$ passed through the motor and an input voltage $E_c f$ of the switching circuit and inputs them to the simulation car driving control unit 24.

As mentioned above, the simulation car field 2 replaces all or some of the actual car 11, actual car driving unit 12, actual car control unit 13, and actual car driving control unit 14 constituting the actual car field 1 with a simulator implemented by a computer that includes CPU and a memory, and data is communicated therebetween so that parallel running of the actual car field 1 and the simulation car field 2 is enabled. The parallel running cited here is a control method of a railway system in which, when the actual car field 1 and the simulation car field 2 run based on an identical operation command, a difference therebetween is minimized with respect to running data, for example, acceleration, velocity, and car mileage of a car and a current value and a voltage value of a car driving unit, and the like.

A state of each part constituting the actual car 11 in the actual car field 1 is transmitted to the simulation car field 2 through an information transmission unit 3. The simulation car 21 constituting the simulation car field 2 is defined as physical theoretical model on a simulator implemented by a computer. However, as compared with a simulation car environment as a physical theoretical model, in an actual car environment, such variable elements as route conditions, passenger load conditions, meteorological conditions are present.

With respect to running data, for example acceleration, velocity, or car mileage of a car or a current value or a voltage value of a car driving unit obtained when the actual car field 1 and the simulation car field 2 run based on an identical operation command, a car operation analysis unit 231, not shown, that minimizes a difference therebetween is provided and a physical theoretical model of the simulation car 21 is corrected based on a result of analysis.

According to the simulation car 21 based on the corrected physical theoretical model, it is expected that running data obtained when the actual car field 1 and the simulation car field 2 run based on an identical operation command is identical. That is, when in the simulation car field 2, control operation of the simulation car driving unit 22 and the simulation car control unit 23 is stable, it is expected that in the simulation car field 2, control operation of the actual car driving unit 12 and the actual car control unit 13 is also stable. For this reason, first, in the simulation car field 2, driving control operation data is corrected so that control operation of the simulation car driving unit 22 and the simulation car control unit 23 is stabilized.

Specifically, the simulation car control unit 23 is provided with an adjustment computation unit that modifies driving control operation data for implementing control operation of the simulation car driving control unit 24 and stabilizes a state of each part constituting the simulation car 21. As an example, with respect to adhesion control that prevents slip/skid between a wheel and a rail, it is ideal that a state of adhesion (tangential force coefficient) between a wheel and a rail and car acceleration implemented by adhesion control are in a proportional relation (Y=kX); therefore, driving control operation data is modified so that car acceleration measured with an adhesion state modified in the simulation car field 2 is in a proportional relation (Y=kX) to optimize the driving control operation data and stability of control operation is thereby verified.

The optimized driving control operation data is transmitted to the actual car field 1 through the information transmission unit 3 to update driving control operation data already installed in the car control unit 13 or the car driving control unit 14. Updating of driving control operation data of the car control unit 13 or the car driving control unit 14 is basically automatically performed when a predetermined condition holds, for example, when the actual car 11 in the actual car field 1 is at a stop or when the car driving control unit 14 is out of operation; however, as a special situation, updating can also be performed by manual operation based on a responsible person's decision or based on decision by AI or the like equivalent to a responsible person.

Further, running data of the actual car 11 operated by optimized driving control operation data in the actual car field 1 is transmitted to the simulation car field 2 through the information transmission unit 3. With respect to running data, for example acceleration, velocity, or car mileage of a car or a current value or a voltage value of a car driving unit obtained when the actual car field 1 and the simulation car field 2 run based on an identical operation command, the driving control operation data of the physical theoretical model of the simulation car driving control unit 24 or the simulation car 21 is corrected again so as to minimize a difference therebetween. Which of the driving control operation data and the physical theoretical model should be corrected is determined by a simulator according to the following basis.

Running data of the actual car 11 obtained when the actual car field 1 and the simulation car field 2 run based on an identical operation command, a running data difference of the actual car 11 operated based on driving control operation data before and after optimization with respect to the running data of the actual car 11, and a running data difference of the actual car 11 operated based on driving control operation data before and after optimization are compared and the following processing is performed.

(1) When the above difference is less than a predetermined value closest to zero as much as possible: the driving control operation data is corrected again.
(2) When the above difference is equal to or above the predetermined value closest to zero as much as possible: the physical theoretical model is corrected again.

When the environments of the actual car field 1 and the simulation car field 2 are identical with each other, it is expected that a running data difference of the actual car 11 operated based on driving control operation data before and after optimization and running data of the actual car 11 operated based on driving control operation data before and after optimization are identical with each other. For a cause of the production of a difference, the environments of the actual car field 1 and the simulation car field 2 are estimated to be different from each other and it is determined from this that the physical theoretic model of the simulation car field 2 requires correction. This determination is regardless of whether the control performance of the actual car 11 and the simulation car 21 operated based on driving control operation data before and after optimization is favorable or not.

The driving control operation data cited here is a control logic of software or the like or a configuration parameter of a control logic installed in the actual car driving control unit 14 for controlling an operation of the actual car driving unit 12 or installed in the simulation car driving control unit 24 for controlling an operation of the simulation car driving unit 22.

According to the above-mentioned configuration, the model accuracy of a simulator constituting the simulation car field 2 can be enhanced based on running data of the actual car field 1. Owing to the enhancement of the model accuracy of a simulator constituting the simulation car field 2, an operation observed when driving control operation data is modified in the actual car field 1 can be predicted and proactively verified based on an operation observed when driving control operation data is modified in the simulation car field 2. The above-mentioned driving control operation data proactively verified in the simulation car field 2 can be transmitted to the actual car field 1 through the information transmission unit 3 and the driving control operation data in the actual car field 1 can be modified to check an actual operation.

That is, a procedure for: enhancing the accuracy of the simulation car 21 so that the action thereof is identical with that of the actual car 11; adjusting driving control at the simulation car 21 with the accuracy enhanced; and applying the adjusted driving control operation data to the actual car 11 is implemented and a control method for a railway system for autonomously optimizing driving control is thereby realized.

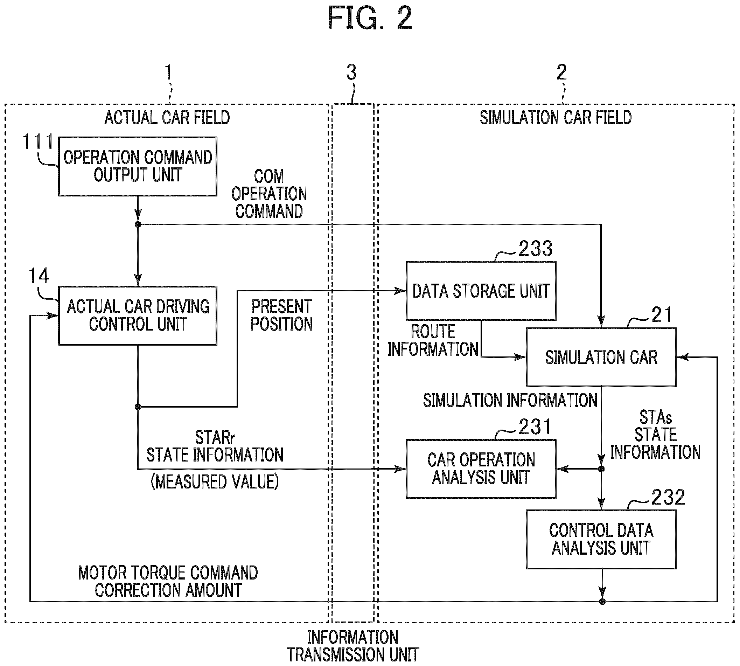

FIG. 2 is a functional block diagram illustrating a basic operation of the present upcycle system in FIG. 1. In FIG. 2, the actual car field 1 and the simulation car field 2 are so configured that they are capable of communicating information data therebetween through the information transmission unit 3. An operation commanding unit 111 outputs an operation command COM commanding an operation, such as power running (acceleration), brake (deceleration/stop), off (coasting), and the like, of the actual car 11. In case of a master controller manipulated by a driver or automatic train operation, an ATO (Automatic Train Operation) device or the like applies.

The operation command COM is inputted to the actual car driving control unit 14 and controls driving force outputted by the actual car driving unit 12, not shown, so that the actual car 11 operates in accordance with the operation command COM. As a result of controlling driving force outputted by the actual car driving unit 12, the actual car driving control unit 14 outputs state information $STAR_r$ so that the actual car 11 operates in accordance with an operation command COM.

The state information $STAR_r$ is physical quantity data recognized in software computation of the actual car driving control unit 14 and includes an acceleration $A_{cc}$, velocity $V_{el}$, and position $P_{os}$ of a car, a rotational speed $F_r$, current $I_m$, and voltage $V_m$ of the traction motor 117, and a direct current $I_s$, direct-current voltage $E_c f$ of the inverter device, and the like. The operation command COM and the state information $STAR_r$ are inputted to the simulation car field 2 through the information transmission unit 3.

The operation command COM is inputted to the simulation car driving control unit 24 constituting the simulation car 21 and controls driving force outputted by the simulation car driving unit 22, not shown, so that the simulation car 21 operates in accordance with the operation command COM. Of state information $STAR_r$, especially, velocity data $VEL_r$ and position data $POS_r$ of the actual car 11 is inputted to a storage unit (memory) 233.

The storage unit 233 holds the gradient data, curve data, station position data STN, and the like of a route along which the actual car 11 runs. The gradient data is table data in which with respect to running position data $POS_r$ of the actual car 11, an amount of gradient (altitude increase rate relative to car mileage) at that position is defined. The gradient data is table data in which a curvature (reciprocal of radius of curve) of a railway track is defined relative to running position data $POS_r$ of the actual car 11. The station position data STN is table data in which a position of a station facility disposed in a running route is indicated relative to running position data $POS_r$ of the actual car 11. Station facilities include a signal box and the like as well as a station and a stop and is usually indicated by a kilometerage indicating the center position of each facility.

The car operation analysis unit 231 is fed with state information $STA_s$ outputted by the simulation car 21 and state information $STAR_r$ outputted by the actual car 11 and transmitted to the simulation car field 2 through the information transmission unit 3 and computes a correction parameter ΔMDL of the simulation car 21 with which an operation of the actual car 11 and an operation of the simulation car 21 approximate to each other based on the state information $STA_s$ and the state information $STAR_r$. The correction parameter ΔMDL is inputted to the simulation car 21 and corrects a configuration parameter of the simulation car 21.

Similarly, also with respect to a difference in behavior between the actual car driving unit 12 and the simulation car driving unit 22, a configuration parameter of the simulation car driving unit 22 is corrected so as to follow a behavior of the actual car driving unit 12. A control data analysis unit 232 is fed with state information $STA_s$ and analyzes and determines an optimization control parameter with which state information $STA_s$ and a state value STAp as a control result as the objective thereof are most approximated.

This analysis of an optimization control parameter is performed after correction of a configuration parameter of the simulation car 21 is completed so that state information $STA_s$ as a result of operation of the simulation car 21 based on an operation command COM follows state information $STAR_r$ similarly as a result of operation of the actual car 11 based on the operation command COM. After completion of configuration parameter correction, the simulation car 21 and the simulation car driving unit 22 exhibit a behavior equivalent to the actual car 11 and the actual car driving unit 12 to an operation command COM; therefore, by equalizing in control operation of the actual car control unit 13 and the simulation car control unit 23 and the actual car driving control unit 14 and the simulation car driving control unit 24, the actual car field 1 and the simulation car field 2 are also equalized in behavior with each other.

For this reason, by applying an optimization control parameter determined at the control data analysis unit 232 in the simulation car field 2 to the actual car control unit 13 and actual car driving control unit 14 in the actual car field 1, an objective control result can be attained in the actual car field 1. Transmission of an optimization control parameter from the simulation car field 2 to the actual car field 1 is implemented by the information transmission unit 3.

According to the above-mentioned configuration, the model accuracy of a simulator constituting the simulation car field 2 can be enhanced based on running data of the actual car field 1. Owing to the enhancement of the model accuracy of a simulator constituting the simulation car field 2, an operation observed when driving control operation data is modified in the actual car field 1 can be predicted and proactively verified based on an operation observed when driving control operation data is modified in the simulation car field 2. The above-mentioned driving control operation data proactively verified in the simulation car field 2 can be transmitted to the actual car field 1 through the information transmission unit 3 and the driving control operation data in the actual car field 1 can be modified to check an actual operation.

That is, a procedure for: enhancing the accuracy of the simulation car 21 so that the action thereof is identical with that of the actual car 11; adjusting driving control at the simulation car 21 with the accuracy enhanced; and applying the adjusted driving control operation data to the actual car 11 is implemented and a control method for a railway system for autonomously optimizing driving control is thereby realized.

The driving control operation data cited here is a control logic of software or the like or a configuration parameter of a control logic installed in the actual car driving control unit 14 for controlling an operation of the actual car driving unit 12 or installed in the simulation car driving control unit 24 for controlling an operation of the simulation car driving unit 22.

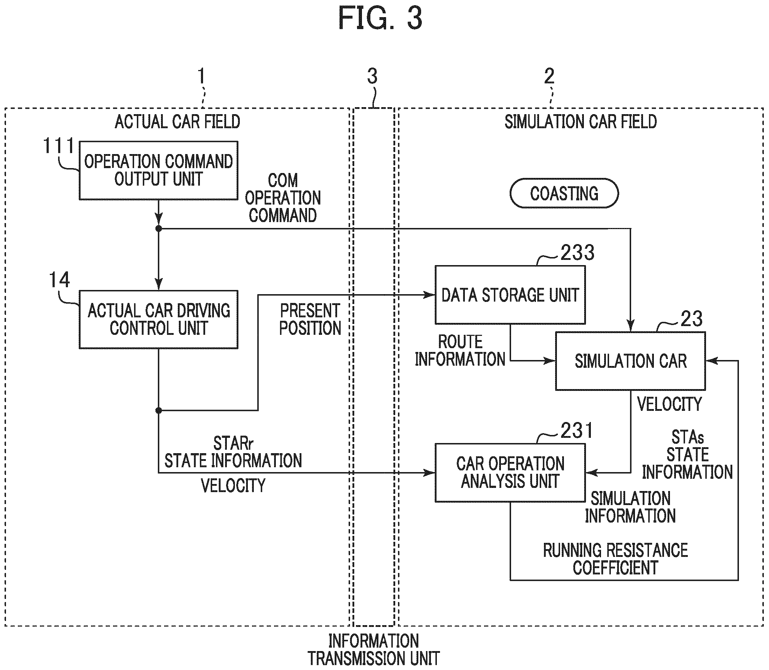

FIG. 3 is a functional block diagram illustrating an example of a basic operation (simulation car model update) of the present upcycle system in FIG. 1. In FIG. 3, the actual car field 1 and the simulation car field 2 are so configured that they are capable of communicating information data therebetween through the information transmission unit 3. An operation commanding unit 111 outputs an operation command COM commanding an operation, such as power running (acceleration), brake (deceleration/stop), off (coasting), and the like, of the actual car 11. In case of a master controller manipulated by a driver or automatic train operation, an ATO device or the like applies.

The operation command COM is inputted to the actual car driving control unit 14 and controls driving force outputted by the actual car driving unit 12, not shown, so that the actual car 11 operates in accordance with the operation command COM. As a result of controlling driving force outputted by the actual car driving unit 12, the actual car driving control unit 14 outputs state information $STAR_r$ so that the actual car 11 operates in accordance with an operation command COM. As a result, an operation command, a position, and a velocity can be collected as actual car data.

The state information $STAR_r$ is physical quantity data recognized in software computation of the actual car driving control unit 14 and includes an acceleration $A_{cc}$, velocity $V_{el}$, and position $P_{os}$ of a car, a rotational speed $F_r$, current $I_m$, and voltage $V_m$ of the traction motor 117, and a direct current $I_s$, direct-current voltage $E_c$ of the inverter device, and the like. The operation command COM and the state information $STAR_r$ are inputted to the simulation car field 2 through the information transmission unit 3.

Of state information $STAR_r$, especially, velocity data $VEL_r$ and position data $POS_r$ of the actual car 11 is inputted to the storage unit 233. The storage unit 233 holds the gradient data GRD, curve data CRV, station position data STN, and the like of a route along which the actual car 11 runs. The gradient data GRD is table data in which with respect to running position data $POS_r$ of the actual car 11, an amount of gradient (altitude increase rate relative to car mileage) at that position is defined. The gradient data GRD is table data in which a curvature (reciprocal of radius of curve) of a railway track is defined relative to running position data $POS_r$ of the actual car 11.

The station position data STN is table data in which a position of a station facility disposed in a running route is indicated relative to running position data $POS_r$ of the actual car 11. Station facilities include a signal box and the like as well as a station and a stop and is usually indicated by a kilometerage indicating the center position of each facility.

The car operation analysis unit 231 is fed with state information $STA_s$ outputted by the simulation car 21 and state information $STAR_r$ outputted by the actual car 11 and transmitted to the simulation car field 2 through the information transmission unit 3 and computes a correction parameter $\Delta MDL$ of the simulation car 21 with which an operation of the actual car 11 and an operation of the simulation car 21 approximate to each other based on the state information $STA_s$ and the state information $STAR_r$. The correction parameter $\Delta MDL$ is inputted to the simulation car 21 and corrects a configuration parameter of the simulation car 21. The car operation analysis unit 231 calculates a velocity difference between the actual car 11 and a simulation by the simulation car 21. Then, the car operation analysis unit 231 corrects a running resistance coefficient so as to correct the velocity difference ($\approx$running resistance error).

Gradient resistance $R_g$ ($POS_r$) is calculated from position data $POS_r$ and gradient data GRD as state information $STA_s$ outputted by the simulation car 21. Gradient resistance $R_c$ ($POS_r$) is calculated from position data $POS_r$ and curve data CRV. Further, Rr ($VEL_r$) is calculated from velocity data $VEL_r$ by a running resistance formula. A running resistance formula is prescribed by a standard or the like and for example, the following formula (1) is known.

$$R(v) = (1.65+0.0247.V(v))\cdot_m M+(0.78+0.0028.V(v))\cdot_m T+9.81\cdot[0.028+0.00\ 78\cdot (n-1)]\cdot V2(v) ---- (1) \tag{1}$$

Here, R: running resistance (N)

$\Delta R$: running resistance correction value (N)
V: velocity of electric railcar (km/h)
$_m M$: load (kN) by total mass of motor car under setting
$_m T$: load (kN) by total mass of control trailer and trailer under setting
$_n$: number of set cars

When Formula 1 is applied as a running resistance formula, V in Formula 1 is $R_r(VER_r)=R(VER_r)$ at the above-mentioned velocity $VER_r$. Meanwhile, a running resistance Rmsd of the actual car 11 is measured based on the operation command COM, position POS, and velocity $VER_r$ (with timestamp) of the actual car 11. A running resistance correction value $\Delta R$ is calculated from a difference from the running resistance $Rr(VER_r)$ calculated by the running resistance formula by the following Formula (2).

$$\Delta R = Rr(VER_r) - R_{msd} ----------- (2)$$

Corrected running resistance $R_{rev}(VER_r)$ is calculated by adding the running resistance correction value $\Delta R$ to $R_r(VER_r)$ calculated by a running resistance of the following Formula (3).

$$R_{rev}(VER_r) = R_r(VER_r) + \Delta R ----------- (3)$$

By applying this corrected running resistance $R_{rev}(VER_r)$ to the simulation car field 2, an operation of the simulation car 21 can be brought closer to an operation of the actual car 11. According to the above-mentioned configuration, the model accuracy of a simulator constituting the simulation car field 2 can be enhanced based on running data of the actual car field 1.

Owing to the enhancement of the model accuracy of a simulator constituting the simulation car field 2, an operation observed when driving control operation data is modified in the actual car field 1 can be predicted and proactively verified based on an operation observed when driving control operation data is modified in the simulation car field 2.

The above-mentioned driving control operation data proactively verified in the simulation car field 2 can be transmitted to the actual car field 1 through the information transmission unit 3 and the driving control operation data in the actual car field 1 can be modified to check an actual operation.

That is, a procedure for: enhancing the accuracy of the simulation car 21 so that the action thereof is identical with that of the actual car 11; adjusting driving control at the simulation car 21 with the accuracy enhanced; and applying the adjusted driving control operation data to the actual car 11 is implemented and a control method for a railway system for autonomously optimizing driving control is thereby realized.

The driving control operation data cited here is a control logic of software or the like or a configuration parameter of a control logic installed in the actual car driving control unit 14 for controlling an operation of the actual car driving unit 12 or installed in the simulation car driving control unit 24 for controlling an operation of the simulation car driving unit 22.

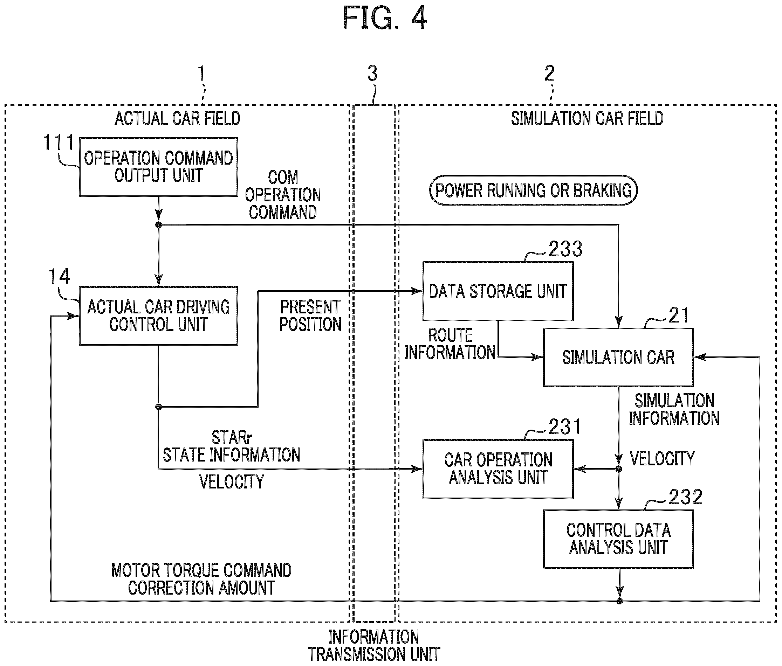

FIG. 4 is a functional block diagram illustrating an example of a basic operation (actual car control update) of the present upcycle system in FIG. 1. In FIG. 4, the operation commanding unit 111 outputs an operation command COM commanding an operation, such as power running (acceleration), brake (deceleration/stop), off (coasting), and the like, of the actual car 11. In case of a master controller manipulated by a driver or automatic train operation, an ATO device or the like applies.

The operation command COM is inputted to the actual car driving control unit 14 and controls driving force outputted by the actual car driving unit 12, not shown, so that the actual car 11 operates in accordance with the operation command COM. As a result of controlling driving force outputted by the actual car driving unit 12, the actual car driving control unit 14 outputs state information $STAR_r$ so that the actual car 11 operates in accordance with an operation command COM. As a result, an operation command, a position, and a velocity can be collected as actual car data.

The state information $STAR_r$ is physical quantity data recognized in software computation of the actual car driving control unit 14 and includes an acceleration $A_{cc}$, velocity $V_{el}$, and position $P_{os}$ of a car, a rotational speed $F_r$, current $I_m$, and voltage $V_m$ of the traction motor 117, and a direct current $I_s$, direct-current voltage $E_c f$ of the inverter device, and the like. The operation command COM and the state information $STAR_r$ are inputted to the simulation car field 2 through the information transmission unit 3.

Of state information STAR$_r$, especially, velocity data VEL$_r$ and position data POS$_r$ of the actual car 11 is inputted to the storage unit 233. The storage unit 233 holds the gradient data GRD, curve data CRV, station position data STN, and the like of a route along which the actual car 11 runs. The gradient data GRD is table data in which with respect to running position data POS$_r$ of the actual car 11, an amount of gradient (altitude increase rate relative to car mileage) at that position is defined.

The gradient data GRD is table data in which a curvature (reciprocal of radius of curve) of a railway track is defined relative to running position data POS$_r$ of the actual car 11. The station position data STN is table data in which a position of a station facility disposed in a running route is indicated relative to running position data POS$_r$ of the actual car 11. Station facilities include a signal box and the like as well as a station and a stop and is usually indicated by a kilometerage indicating the center position of each facility.

The car operation analysis unit 231 is fed with state information STA$_s$ outputted by the simulation car 21 and state information STAR$_r$ outputted by the actual car 11 and transmitted to the simulation car field 2 through the information transmission unit 3 and computes an operation of the actual car 11 and operation data of the simulation car 21 based on the state information STA$_s$ and the state information STAR$_r$. The operation data of the actual car 11 and the simulation car 21 is data related to car dynamics and includes the following or part thereof.

Acceleration of each car constituting a train: $((d/dt)V_{xv\_i}, (d/dt)\theta_{yv\_i}$, velocity: $V_{xv\_i}, \theta_{yv\_i}$

Acceleration of the truck of each car: $(d/dt)V_{xt\_ji}, (d/dt)\theta_{yt\_ji}$, velocity: $V_{xt\_ji}, \theta_{yt\_ji}$

Acceleration of the wheelset of each truck: $(d/dt)V_{xw\_kji}, (d/dt)\theta_{yw\_kji}$, velocity: $V_{xw\_kji}, \theta_{yw\_kji}$

Here, $V_x$ denotes velocity in X axis (rail direction) and $\theta_y$ is angular velocity in Y axis (sleeper direction).

(i is a car number of a car and i=1, 2, 3...; j is the truck of each car and j=1, 2...; and k is the truck of each car and k=1, 2...)

These pieces of operation data of the actual car 11 and simulation car 21 are computed and outputted. The control data analysis unit 232 has a function of: taking a motor current I$_m$ outputted by the simulation car control unit 23 and an input voltage E$_c$f of a switching circuit, and the like as control data; and searching for a control parameter that more stabilizes control of the simulation car driving control unit 24 based on the control data. An example of search for a control parameter that stabilizes control is described in Nonpatent Literature 1.

With respect to adhesion control in which wheel slip caused by wheel tread force transmitted from a wheel to a rail based on motor torque of railway car exceeding a frictional limit between a wheel and a rail in rainy weather or the like is suppressed by reducing the wheel tread force, Nonpatent Literature 1 proposes a technique in which a stability control parameter with which wheel tread force is stably transmitted against fluctuation in frictional limit in a rainy state or the like is searched for by the Taguchi Method and performance verification by an actual car 11 to which a stability control parameter is applied (slip in acceleration is discriminately referred to as wheel slip and that in deceleration is discriminately referred to as skid but they are collectively referred to as "wheel slip" here.

While it is desirable to perform search for a stability control parameter in an actual car environment, in an actual car environment, route conditions, passenger load conditions, meteorological conditions are temporarily changing and thus it is difficult to ensure the reproducibility of data that is collected by altering a larger number of parameters. For this reason, it is desirable to adopt a procedure for searching for and determining a stability control parameter in a simulation car field 2 that provides an environment closest to an actual car 11 as much as possible.

A stability control parameter determined by the above-mentioned procedure is applied as a control parameter for the actual car driving control unit 14 in the actual car field 1 and the simulation car driving control unit 24 in the simulation car field 2 and is thereafter controlled by a stabilization parameter. A result of control by a stabilization parameter is aggregated in the car operation analysis unit 231 and it is confirmed that the operation data and control data of a car fall within an objective range.

When operation data or control data of a car is out of an objective range, the following cycle is repeated in the control data analysis unit 232: a control parameter is searched for and a stabilization parameter is computed and is applied as a control parameter of the actual car driving control unit 14 in the actual car field 1 and the simulation car driving control unit 24 in the simulation car field 2. The car operation analysis unit 231 calculates a velocity difference between the actual car 11 and a simulation by the simulation car 21. The control data analysis unit 232 corrects a motor torque command so as to correct the velocity difference ($\approx$acceleration error). Even if a transmission delay is present, it is not a problem as long as all the pieces of data delay by an equal amount.

According to the above-mentioned configuration, the model accuracy of a simulator constituting the simulation car field 2 can be enhanced based on running data of the actual car field 1. Owing to the enhancement of the model accuracy of a simulator constituting the simulation car field 2, an operation observed when driving control operation data is modified in the actual car field 1 can be predicted and proactively verified based on an operation observed when driving control operation data is modified in the simulation car field 2. The above-mentioned driving control operation data proactively verified in the simulation car field 2 can be transmitted to the actual car field 1 through the information transmission unit 3 and the driving control operation data in the actual car field 1 can be modified to check an actual operation.

That is, a procedure for: enhancing the accuracy of the simulation car 21 so that the action thereof is identical with that of the actual car 11; adjusting driving control at the simulation car 21 with the accuracy enhanced; and applying the adjusted driving control operation data to the actual car 11 is implemented and a control method for a railway system for autonomously optimizing driving control is thereby realized.

Driving control operation data is a control logic or a configuration parameter of a control logic installed in the actual car driving control unit 14 for controlling an operation of the actual car driving unit 12 or installed in the simulation car driving control unit 24 for controlling an operation of the simulation car driving control unit 22.

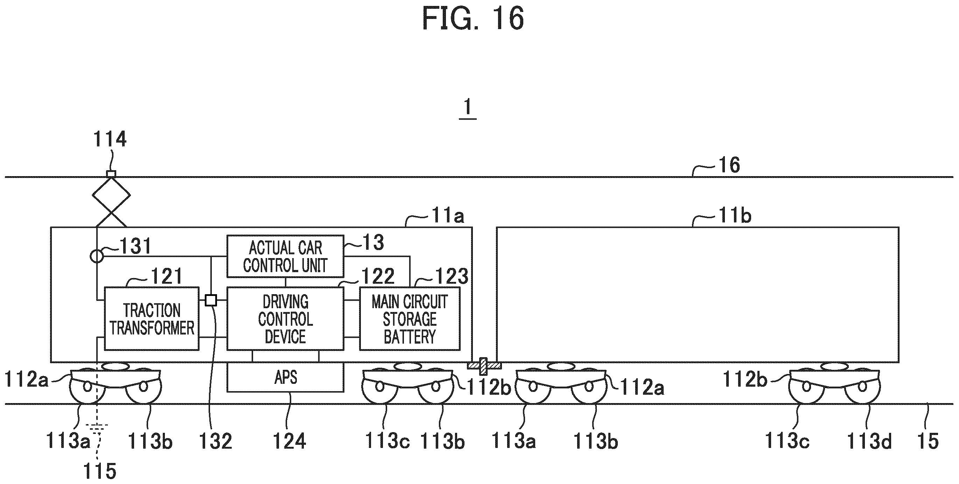

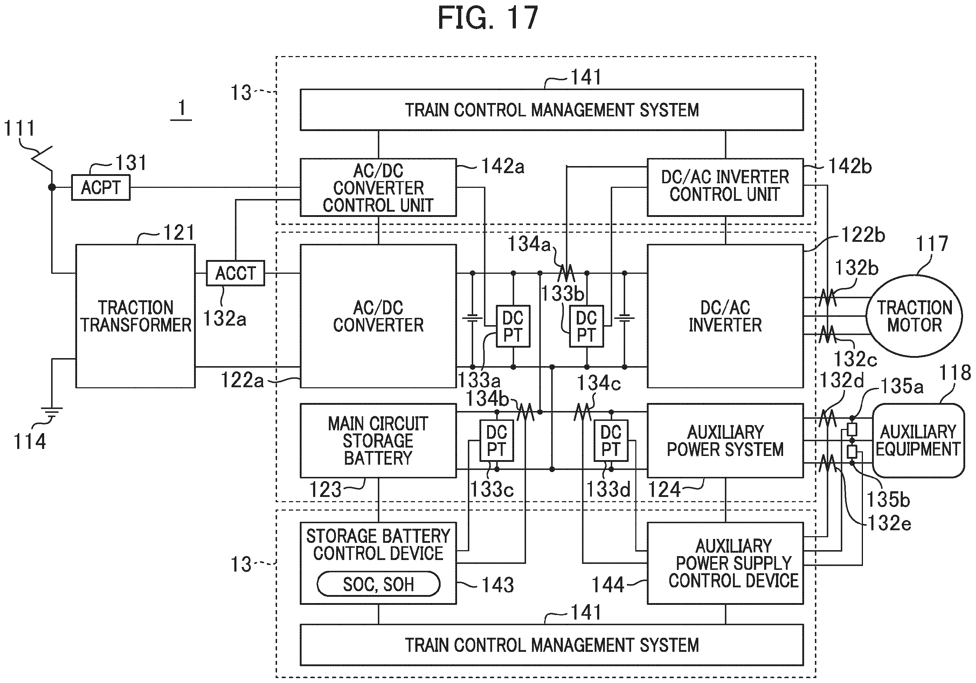

FIG. 5 is a schematic explanatory drawing illustrating an example of the information transmission unit 3 of the present upcycle system in FIG. 1. In the actual car field 1, a plurality of actual cars 11 is running along such a rail 15 as a rail. When the actual cars 11a to 11e (11 when discrimination is unnecessary) are electric rolling stocks, a driving system and such auxiliary equipment 118 as illumination and air conditioner are supplied with electric power from such a power supply unit 16 as an overhead contact line. A configuration of a driving control function of the actual car 11a will be described in more detail later with reference with FIG. 16 and FIG. 17. When an actual car is not an electric rolling stock and a driving system and the auxiliary equipment 118 can be supplied with electric power by an engine, such as a power generation device as a fuel cell, or such a power storage unit as a storage battery, the power supply unit 16 is not indispensable.

An actual car 11 need not be a single car and may be a train set by coupling a plurality of cars sometimes. A plurality of rails 15 may be arranged in parallel to configure a double track section in which trains can simultaneously run in different directions, such as up direction and down direction. The simulation car field 2 communicates at least the above-mentioned state information $STAR_r$ of the actual car 11 and a control parameter $PARA_{ctrl}$ of the actual car driving control unit 14 with the actual car field 1 through the information transmission unit 3. Hereafter, a description will be given to a configuration of the information transmission unit 3.

An actual car 11 communicates information with a wide-area information transmission base 33 by radio communication. As the radio communication cited here, a mobile communication system in which communication is continued while an actual car is moving in a plurality of limited communication ranges by the fifth-generation mobile communication system (5G) or the like can be applied. Information communicated at the wide-area information transmission unit 32 is aggregated in the wide-area information transmission unit 32 and is connected with an external information interface (not shown) of the simulation car field 2 by the wide-area information transmission unit 32 such as the Internet. As a result, information of the actual car field 1 and the simulation car field 2 can be received.

Further, an actual car 11 communicates information with a local information communication base 36 by radio communication. The local information communication base 36 is installed in a station, a depot, and the like and enables radio communication with an actual car 11 at a stop. For this purpose, a wireless LAN, Bluetooth (registered trademark), infrared communication, and the like suitable for equipment-to-equipment communication at a short range can be applied. Information communicated at the local information communication base 36 is aggregated at the wide-area information transmission unit 32 and is connected with an external information interface (not shown) of the simulation car field 2 through a wide-area information transmission path 31 such as the Internet. As a result, information of the actual car field 1 and the simulation car field 2 can be received.

According to the above-mentioned configuration, the model accuracy of a simulator constituting the simulation car field 2 can be enhanced based on running data of the actual car field 1. Owing to the enhancement of the model accuracy of a simulator constituting the simulation car field 2, an operation observed when driving control operation data is modified in the actual car field 1 can be predicted and proactively verified based on an operation observed when driving control operation data is modified in the simulation car field 2. The above-mentioned driving control operation data proactively verified in the simulation car field 2 can be transmitted to the actual car field 1 through the information transmission unit 3 and the driving control operation data in the actual car field 1 can be modified to check an actual operation.

That is, a procedure for: enhancing the accuracy of the simulation car 21 so that the action thereof is identical with that of the actual car 11; adjusting driving control at the simulation car 21 with the accuracy enhanced; and applying the adjusted driving control operation data to the actual car 11 is implemented and a control method for a railway system for autonomously optimizing driving control is thereby realized.

The driving control operation data cited here is a control logic of software or the like or a configuration parameter of a control logic installed in the actual car driving control unit 14 for controlling an operation of the actual car driving unit 12 or installed in the simulation car driving control unit 24 for controlling an operation of the simulation car driving control unit 22.

As mentioned up to this point, in the present upcycle system in the first embodiment, measurement data of an actual car environment is transmitted to a simulation environment; a simulation model approximating movement of an actual car 11 is identified based on the measurement data; driving control is optimized in the simulation environment simulating such running conditions as route conditions, passenger load conditions, and meteorological conditions; and optimization control data is transmitted to an actual car environment and is reflected in control of the actual car 11.

A merit and a demerit obtained when software implementing a railway car driving control system is updated are verified and determination of whether to update (upcycle) is assisted. As a result, the present upcycle system is capable of keeping driving control of a railway car in an optimum state corresponding to route conditions, passenger load conditions, and meteorological conditions. Further, the present upcycle system prompts carbon neutrality due to an energy saving (hereafter, abbreviated as "ES") effect and circular economy due to an effect of reduction of wastes by lengthening a life of a wheel and the like by wheel slip prevention and thereby contributes to the realization of a sustainable society.

Second Embodiment

In relation to the second embodiment, a present upcycle system is taken as an example in which upcycle system, performance enhancement implemented when various parts or the like used in a battery powered electric railcar or a hybrid electric railcar (hereafter, referred to as "battery powered electric railcar and the like") are updated is verified and determination of timing or appropriateness of the update is assisted. Here, a storage battery is taken as an example of a target product of upcycle related to railway but any other constituent part mounted in a railway car, especially, other on-board equipment in a battery powered electric railcar or the like and ground equipment and the like, such as a signal system, are also acceptable.

Possible constituent parts mounted in a railway car include: on-board equipment, such as driving control device, auxiliary power supply control device, fuel cell system, air conditioner, cab monitoring device, TCMS (Train Control Management System), PIS (Passenger Information System); internal accommodations, such as seat and the like; member of car; front monitoring device, safety monitoring device; driver advisory system; automatic operation; and control function for ground-on board radio information transmission and the like. For example, in case of storage batteries, ES, shortening of charging time, increase in storage capacity, lengthening of life, and wastes reduction can be implemented by performance enhancement. In case of driving devices, ES, improvement of ride comfort, lengthening of life, and wastes reduction can be implemented.

In recent years, the performance of storage batteries has been remarkably enhanced; therefore, by comparing and verifying a degree of deterioration before update and performance enhancement after update by a digital twin when a storage battery is replaced, a high effect is brought about. As mentioned above, with respect to upcycling of a product and a part module whose performance is chronologically and continuously enhanced, even though it is a simple preserving action of only replacing a worn member with a replacement member of the identical specifications, an effect of optimization of determination of replacement timing thereof is brought about.

Measurement data of an actual car environment is transmitted to a simulation environment; a simulation model approximating movement of an actual car 11 is identified based on the measurement data; driving control is optimized in the simulation environment simulating such running conditions as route conditions, passenger load conditions, and meteorological conditions; and optimization control data is transmitted to an actual car environment and is reflected in control of the actual car 11.

FIG. 6 is a conceptual explanatory drawing explaining a circulation system of a storage battery based on the present upcycle system in the second embodiment. A description will be substantially chronologically given to the circulation system in FIG. 6. A storage battery is produced, installed, operated and works and is upcycled when value enhancement becomes feasible, and an upcycle article reflecting the foregoing is produced and circulated.

A process of production includes organizations for planning, designing, specification decision, material procurement, manufacture of mass-produced products, inspection, and shipment. In a process of operation, a storage battery is carried in, installed, and caused to work but is carried out after removal for value enhancement. In a process of upcycle, a spent storage battery is recovered, the quality is measured to determine a degree of deterioration, a storage battery is manufactured/produced based on an upcycle design, a grade thereof is evaluated, a rank of the storage battery is classified and managed, an upcycle article is thereby made into a product. Recovery cited here refers to returning of a spent storage battery. Meanwhile, recovery of software may mean a state in which the software does not exhibit an expected effect.

Such an upcycle article is also placed in a sales route for new product supply and circulated. To make an upcycle article into a product and circulate the article, data management for product and material is required. In a process of this data management, operation plan, model identification, upcycle evaluation, quality management, and upcycle design guideline are important. A function of data management is mainly to collect operation data (command and working data) and provide an operation plan.

More examples of information that must be collected for data management are production plan, specifications, required quantity, quality measurement data, and historical trail (such a history as lifetime data), and the like. Examples of information that can be provided by a function of data management are, aside from operation plane, trust data (quality and life) for a production department, information of production quantity and recipe for an upcycle department, and the like.

In the concept of upcycle in FIG. 6, items are not always in the order listed. A storage battery is produced, installed, made to work, and upcycle designed after recovery and an upcycle article reflecting the foregoing is produced and circulated. According to the circulation system in FIG. 6, upcycle is performed only when an upcycle evaluation based on data management for product and material is high. By comparing a degree of deterioration before update and performance enhancement after update by a digital twin when a storage battery is replaced, the appropriateness of replacement at that time is clarified.

A storage battery is operated for the long term with the energy efficiency so reduced that replacement with a new one is delayed; therefore, as replacement timing is more delayed, a dramatic ES effect due to recovery of a largely reduced storage capacity is obtained just by replacing the storage battery with a new one of the equivalent specifications. Conversely, when replacement with a new one is too early, a storage battery favorable in energy efficiency and high in salvage value is wastefully discarded; however, as replacement timing is earlier, a degree of reduction in storage capacity is more reduced before replacement and a higher ES effect is brought about.

Meanwhile, in recent storage batteries, remarkable performance enhancement occurs for several years considered to be a replacement cycle; therefore, just by setting optimum replacement timing of a storage battery, the performance of the entire target products, such as a battery powered electric railcar, using the storage battery is enhanced and the life thereof is lengthened to reduce wastes. Since the storage battery is a chemistry application product, the action of a plurality of parameters that define the operating characteristics thereof is complicated; however, an arithmetic model in which the parameters are systematized has been composed and correction coefficients and the like have also been set up to the extent that they can be simulated by a computer.

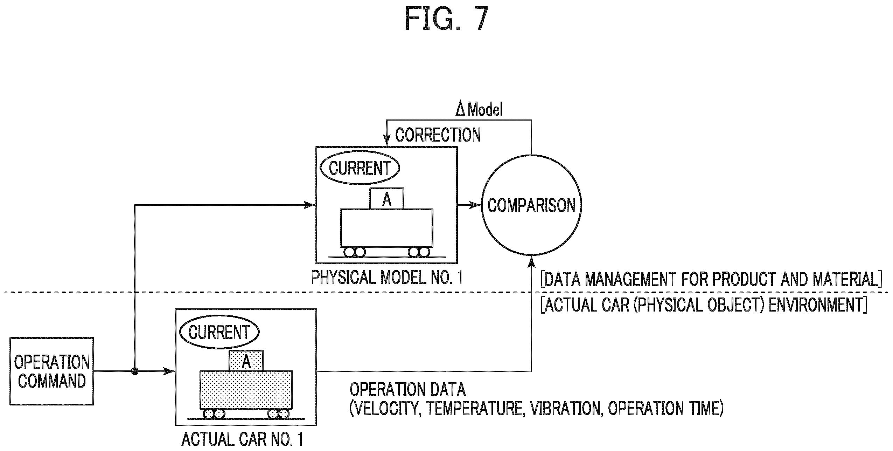

In the present upcycle system, the quality of storage batteries is altered to recyclable products with which wastes are reduced and extractable effective materials are recycled to continuously preserve environments. From the viewpoint of upcycle by which the value of a product is enhanced as mentioned above, the present upcycle system performs advantageous upcycle only when upcycle evaluation is high according to the circulation system in FIG. **6**. Hereafter, a more specific description will be given to upcycle with reference to FIG. 7 to FIG. 14. The present upcycle system executes an operation command by manned operation with DAS (Driver Advisory System). Or, the present upcycle system executes an operation command by automatic operation.

FIG. 7 is a schematic explanatory drawing explaining parameter identification in relation to the circulation system in FIG. 6. In FIG. 7, the present upcycle system causes both of the following to execute an operation command: a current actual car No. 1 (here, function A equipped in the actual car is included) indicated by "Current" representing before upcycle and a current physical model No. 1 (here, function A on the physical model is included) corresponding thereto.

With respect to the actual car No. 1 and the physical model No. 1 aiming at agreement of performance, the present upcycle system performs paired comparison so that their respective operation data (velocity, temperature, vibration, operation time) can be identified and identifies parameters so as to eliminate a difference ΔMode of results of comparison. That is, parameter identification refers to adjusting parameters of models so that the actual car No. 1 and the physical model No. 1 perform identical operation to an identical command.

It is desirable that parameters are identified until the actual car No. 1 and the physical model No. 1 agree with each other in operation; however, a difference is permissible to the extent that required accuracy is ensured in a subsequent optimization process for control performance. Agreement (a difference is not more than a predetermined value) refers to a level at which a simulation result is acceptable.

That is, agreement refers to that a simulation result can be calculated and outputted to a determinable level; since as a result, by executing an operation command, a parameter can be identified by a predictable operation profile and thus, an effect of identification accuracy being enhanced and stabilized is obtained. However, in reality, with respect to movement of a current and a voltage of a driving control device, a difference between the actual car No. 1 and the physical model No. 1 in operation may be permitted to some extent with a measurement error of current and voltage detectors mounted in the actual car No. 1 taken into account.

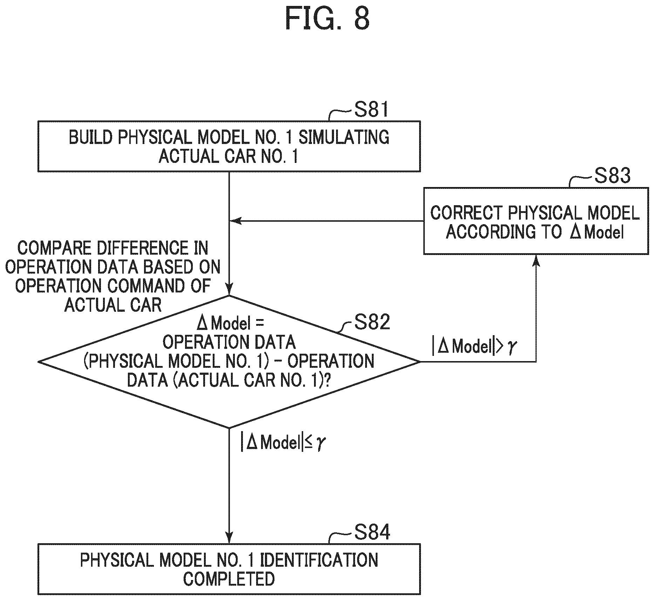

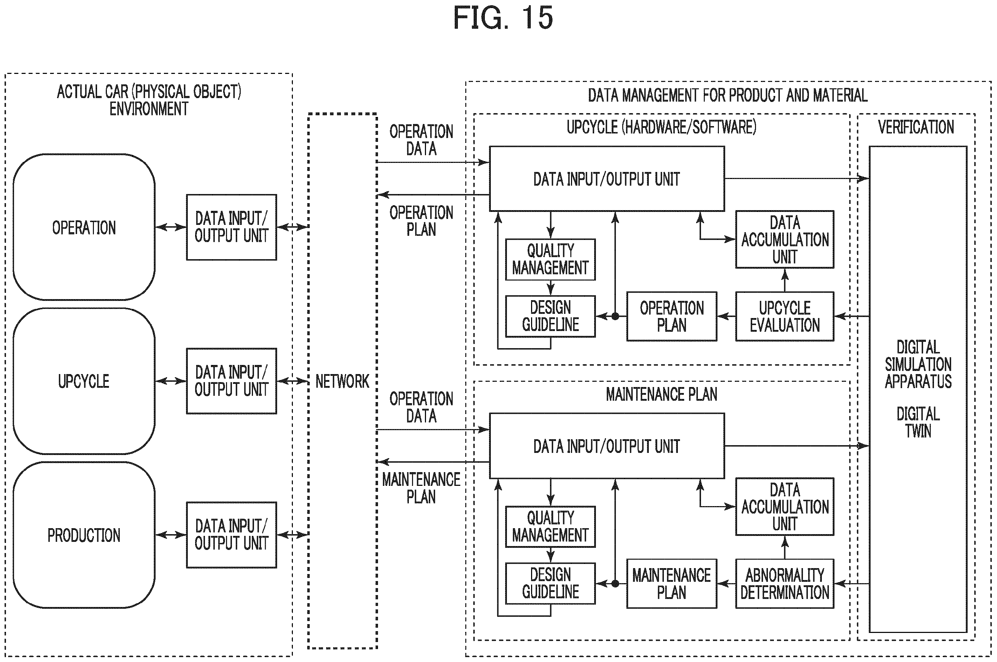

The actual car No. 1 is actually operated in an actual car 11 (physical object) environment described later with reference to FIG. 15. Meanwhile, the current physical model No. 1 is a digital twin for: reproducing a real space in a virtual (cyber) space for data management for product and material shown in FIG. 15; and utilizing a simulation by a computer and predicting and evaluating a result of update of software and a part as well as a failure prediction. A description will be given to a procedure therefor with reference to FIG. 8.

FIG. 8 is a flowchart explaining a procedure for the parameter identification in FIG. 7. The present upcycle system builds the physical model No. 1 simulating the actual car No. 1 (S81). Subsequently, the present upcycle system compares a difference in operation data based on an operation command of the actual car 11 as indicated by the following formula (S82).

ΔModel = operation data (physical model No. 1) - operation data (actual car No. 1)

When ΔModel|>γ and a difference is present as a result of the comparison (S82), the present upcycle system corrects the physical model according to ΔModel (S83). When as a result, |ΔModel|≤γ and a difference is eliminated, the present upcycle system completes the identification of the physical model No. 1. 0 is just an example.

FIG. 9 is a schematic explanatory drawing explaining upcycle evaluation in relation to the circulation system in FIG. 6. Here, again, a description will be given mainly to a difference from FIG. 7. In FIG. 9, the present upcycle system causes both of the following to execute an operation command: a current physical model No. 1 indicated by "Current" representing before upcycle and an updated physical model No. 2 indicated by "New" representing after upcycle corresponding thereto.

The physical model No. 1 and the physical model No. 2 are digital twins for simulation in a virtual (cyber) space for the data management for product and material shown in FIG. 15. With respect to the physical model No. 1, parameter identification has been completed based on the operation data of the above-mentioned actual car No. 1. With respect to the physical model No. 2, "function A" is altered to "function A'" as compared with the physical model No. 1.

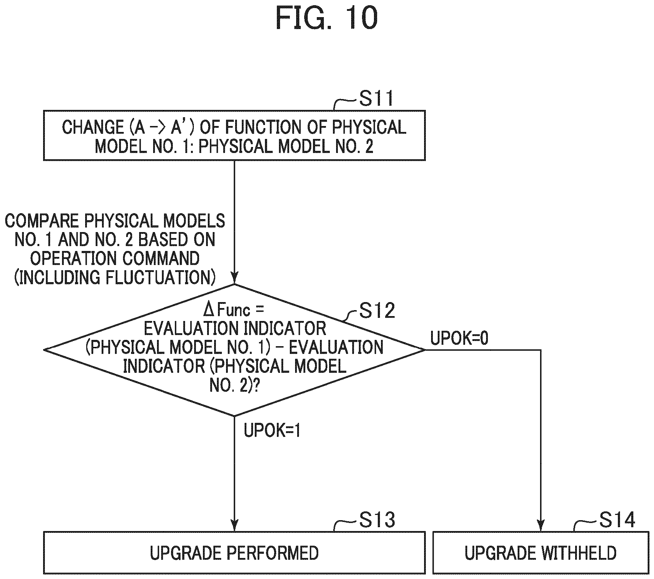

With respect to the functions A, A' of both, for example, "A" is a current storage battery module. "A'" is a storage battery module with the performance of cells enhanced (loss reduction or the like). With respect to upcycle evaluation, the present upcycle system can measure a degree of progression of deterioration using, for example, storage battery deterioration indicator SOH (State of Health) as an evaluation indicator. In this case, it is advisable to set a limit value of SOH at which replacement of a storage battery is determined as reference value K. A threshold value is determined with respect to Low/High relative to the set reference value K. The present upcycle system is characterized in that: at this time, not only a Low->High transition as the above-mentioned threshold value determination but also time when this transition occurs is clarified. As a result, not a storage battery replacement determination based on a result of arrival at a limit value of the above-mentioned storage battery deterioration indicator SOH, the following action is enabled: time of arrival at the limit value is predicted and upcycle of a storage battery is proposed while the storage battery is exhibiting desired performance. The reference value K as limit value is on the assumption that a designer determines the reference value based on equipment specifications or the like; instead, an AI system may determine the reference value based on performance in the past or the like. Subsequently, a description will be given to a procedure therefor with reference to FIG. 10.

FIG. 10 is a flowchart explaining a procedure for the upcycle evaluation in FIG. 9. First, the function A of the physical model No. 1 is altered to the function A' of the physical model No. 2 (S11). Subsequently, the physical models No. 1 and No. 2 are compared based on an operation command (including fluctuation) as indicated by the following formula (S12).

$$\Delta Func = \text{evaluation indicator (physical model No. 1)} - \text{evaluation indicator (physical model No. 2)}$$

When a result of the comparison (S12) is as indicated in FIG. 9(1), upcycle is performed (S13). Meanwhile, when a result of the comparison (S12) is as indicated in FIG. 9(0), upcycle is withheld (S14).

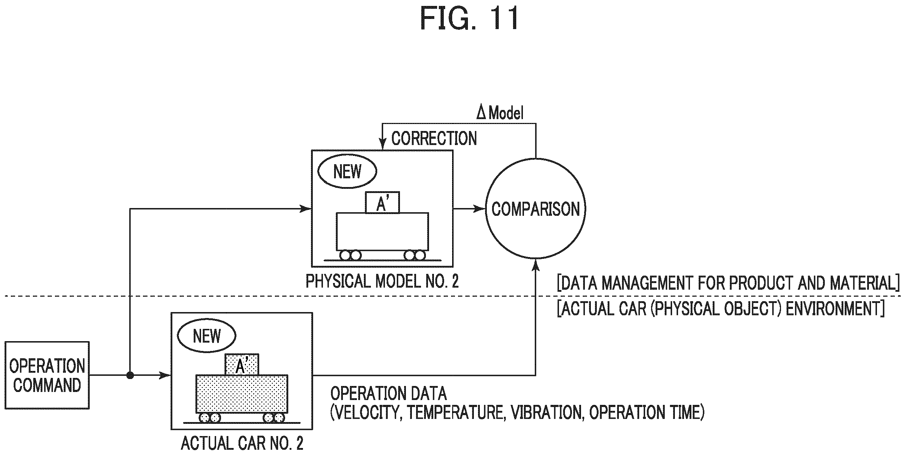

FIG. 11 is a schematic explanatory drawing explaining parameter identification (after upcycle) in relation to the circulation system in FIG. 6. Here, again, a description will be given mainly to a difference from FIG. 7. In FIG. 11, the present upcycle system causes both of the following to execute an operation command: an updated actual car No. 2 (here, function A' mounted in the actual car is included) indicated by "New" representing after upcycle; and an updated physical model No. 2 (here, function A' on physical model is included) corresponding thereto. The functions of both are A', A'.

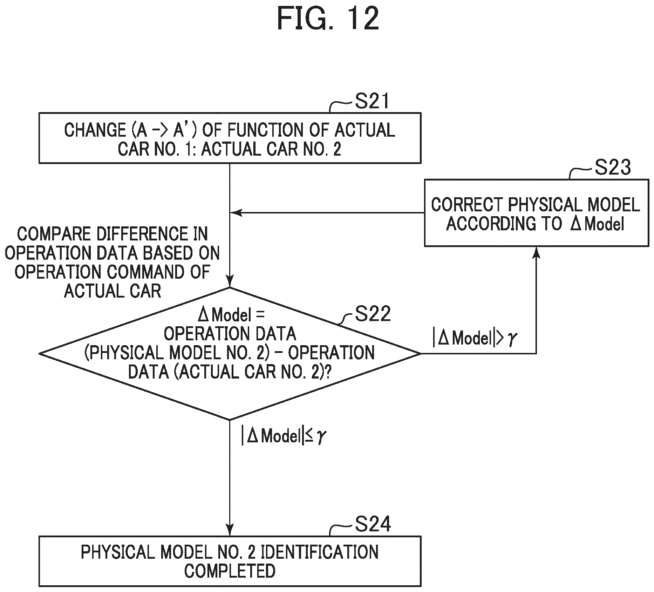

The updated actual car No. 2 is actually operated in the actual car 11 (physical object) environment described later with reference to FIG. 15. Meanwhile, the updated physical model No. 2 is a digital twin for simulation in a virtual (cyber) space for the data management for product and material shown in FIG. 15. Subsequently, a description will be given to a procedure therefor with reference to FIG. 12.

FIG. 12 is a flowchart explaining a procedure for the parameter identification (after upcycle) in FIG. 11. First, the function A of the physical model No. 1 is altered to the function A' of the physical model No. 2 (S21). Subsequently, a difference in operation data is compared based on the operation command of the actual car 11 as indicated by the following formula (S22).

$$\Delta Model = \text{operation data (physical model No. 2)} - \text{operation data (actual car No. 2)}$$

When a result of the comparison (S22) is $|\Delta Model| > \gamma$ and a difference is present, the physical model is corrected according to $\Delta Model$ (S23). When as a result, $|\Delta Model| \leq \gamma$ and a difference is eliminated, identification of the physical model No. 2 is completed.

The above-mentioned parameter identification is on the assumption that the parameter identification is performed based on operation data at normal time and use of operation data in such abnormal time as accident or failure in parameter identification must be avoided. For this reason, any accident or failure must be monitored in parallel with parameter identification and it is desirable to make a maintenance determination utilizing information based on this monitoring. While upcycle is replacement involving value enhancement, maintenance is an act of preservation to replace an article or the like deteriorated due to long time use. However, subjecting an article or the like deteriorated due long time use to replacement involving value enhancement is upcycle.

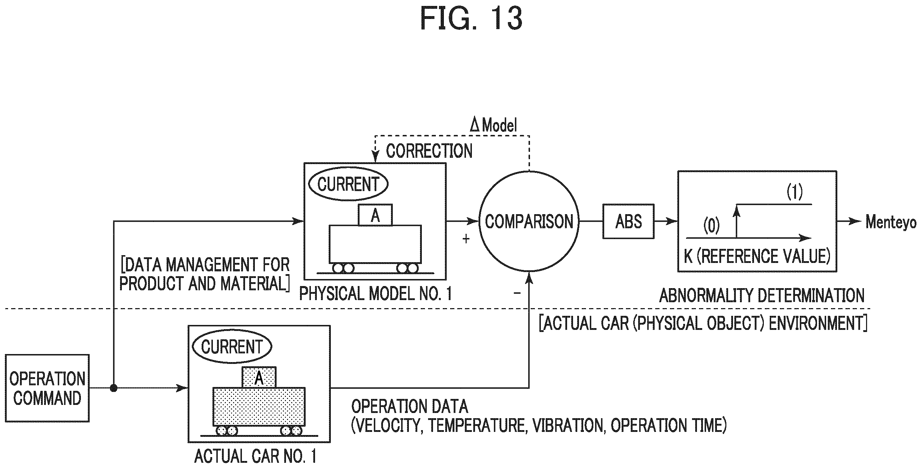

FIG. 13 is a schematic explanatory drawing explaining maintenance determination in relation to the circulation system in FIG. 6. Here, again, a description will be given mainly to a difference from FIG. 7. In FIG. 13, the present upcycle system causes both of the following to execute an operation command: a current actual car No. 1 (here, function A mounted in the actual car is included) indicated by "Current" representing before upcycle; and a current physical model No. 1 (here, function A on the physical model is included) indicated by "Current" corresponding thereto.

With respect to the functions A, A of both desired to agree with each other in performance, the present upcycle system performs paired comparison and, when a result of comparison reveals a presence of a difference, determines an abnormality. The current actual car No. 1 is actually operated in the actual car 11 (physical object) environment described later with reference to FIG. 15. Meanwhile, the current physical model No. 1 is a digital twin for simulation in a virtual (cyber) space for the data management for product and material shown in FIG. 15.

With respect to evaluation of comparison of the functions A, A of both, the present upcycle system: takes, for example, operation data (velocity, temperature, vibration, operation time) as evaluation indicator; makes a threshold value determination with respect to Low/High relative to a set reference value K; and, when a result of determination is high, issues a signal prompting execution of maintenance. When an abnormality determination is made, the present upcycle system is capable of warning a driver in a cab of that.

Railway cars are characterized in that a failure of a storage battery module highly probably occurs only in a certain car and a failure less probably similarly occurs in other cars. At this time, a (sensor) failure in the subject car is determined from information of other cars. Therefore, only a failed certain storage battery can be disconnected from the relevant car and the driving force of the other sound cars can be intensified to continue the operation of the train. As a result, the present upcycle system is capable of enhancing the availability of train operation.

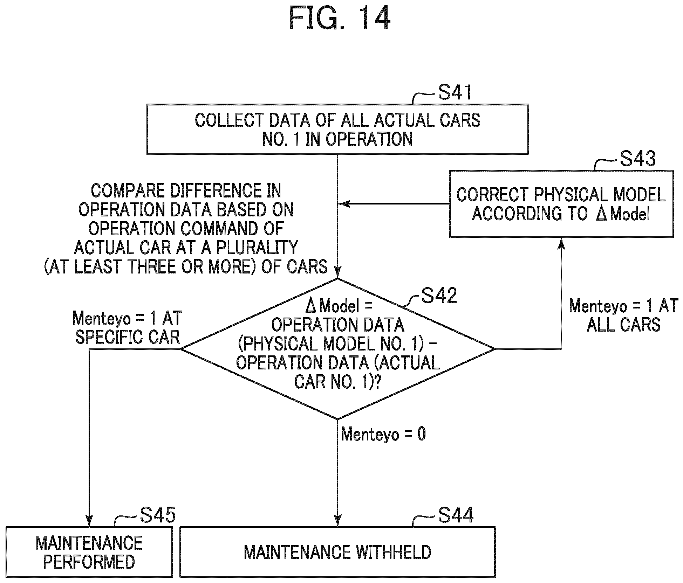

FIG. 14 is a flowchart explaining a procedure for the maintenance determination in FIG. 13. First, data is collected from all the actual cars No. 1 put into operation (S41). Subsequently, at a plurality (at least three or more) of cars, a difference in operation data is compared based on an operation command of the actual car 11 as indicated by the following formula (S42).

$\Delta$Model = operation data (physical model No. 1) - operation data (actual car No. 1)

When as a result of the comparison (S42), Menteyo=1 in all the cars, the physical model is corrected according to $\Delta$Model (S43). When as a result of the comparison (S42), Menteyo=0 in all the cars, maintenance is withheld (S44). When as a result of the comparison (S42), Menteyo=1 in a specific car, maintenance is performed (S45).

When $\Delta$model>K in all the cars, it is determined that identification of a physical model is insufficient and the processing returns to the model identification cycle. When $\Delta$model<K in a specific car, it is determined that the performance of the function A of the relevant car has been deteriorated and an abnormality determination is made and maintenance is performed.

FIG. 15 is a conceptual explanatory drawing explaining a data management function for product and material and a maintenance plan proposing function in the present upcycle system. In the present upcycle system, as shown in FIG. 15, information is communicated between a management department that manages data of product and material and an actual car 11 (physical object) environment through a network. The data management side acquires operation data from the actual car 11 (physical object) environment and provides an operation plan and a maintenance plan.

As important information, the actual car 11 (physical object) environment has operation information, upcycle information, and production information. These pieces of information are connected to the network through respective data input/output units and is inputted/outputted to the outside. The management department plans and implements upcycle by simulation using a digital twin and a maintenance plan.

Upcycle is performed with at least either of hardware and software. In relation to the first embodiment, upcycle with software is taken as an example and in relation to the second embodiment, upcycle with hardware is taken as an example. Upcycle is represented by feedback to a design guideline based on quality management. Upcycle is appropriately evaluated and accumulated as data and is also fed back to an operation plan. The feedback from upcycle is connected to the network through a data input/output unit and the information thereof is effectively utilized.

A maintenance plan is also implemented with at least either of hardware and software. Examples of maintenance of software are software modification arising from hardware modification, reflection of an improvement item in any other project, and the like. The upcycle and maintenance plan shown in FIG. 15 are identical in mode with each other except that information provided to the actual car 11 (physical object) environment is changed from operation plan to maintenance plan. A description will be given with a storage battery taken as an example; replacement of an article deteriorated due to long time use with an original new one is maintenance as an act of preservation and replacement involving value enhancement is upcycle. In either case, the management department makes an upcycle plan based on simulation using a digital twin or a maintenance plan and executes the plan.

FIG. 16 is a functional block diagram illustrating a configuration of a modification in which the actual cars 11a, 11b in FIG. 5 are coupled into one set. With respect to a part already described with reference to FIG. 5, a description thereof will be omitted and be given only to a difference. As shown in FIG. 16, in case of electric railcar, in the actual car field 1, the actual car 11a having driving force is operated in a train set in which the actual car 11a tows the actual car 11b having no driving force. The actual cars 11a, 11b may both have driving force or the actual cars need not be an electric railcar and may be an electric locomotive.

The actual car 11a forms a current path so that: an electric current received from the power supply unit 16 by a power collector 114 is inputted to the primary winding of a traction transformer 121 and is fed back to a substation through trucks 112a, 112b (collectively truck 112 when discrimination is unnecessary), wheelsets 113a to 113d (collectively 113 when discrimination is unnecessary), a grounding device 115, and a rail 15. The actual car 11a controls, the traction transformer 121, the driving control unit 122, a main circuit storage battery 123, and an auxiliary power system (APS_DC/AC) 124 as main on-board devices by the actual car control unit 13. An AC/DC converter 122a and a DC/AC inverter 122b are collectively referred to as driving control unit 122.

An alternating-current voltage detector (ACPT) 131 is disposed between the power collector 114 and the primary winding of the traction transformer 121 and inputs a detected voltage signal to the actual car control unit 13 for control. An alternating current detector (ACCT) 132a inputs a detected current signal to the actual car control unit 13 for control.

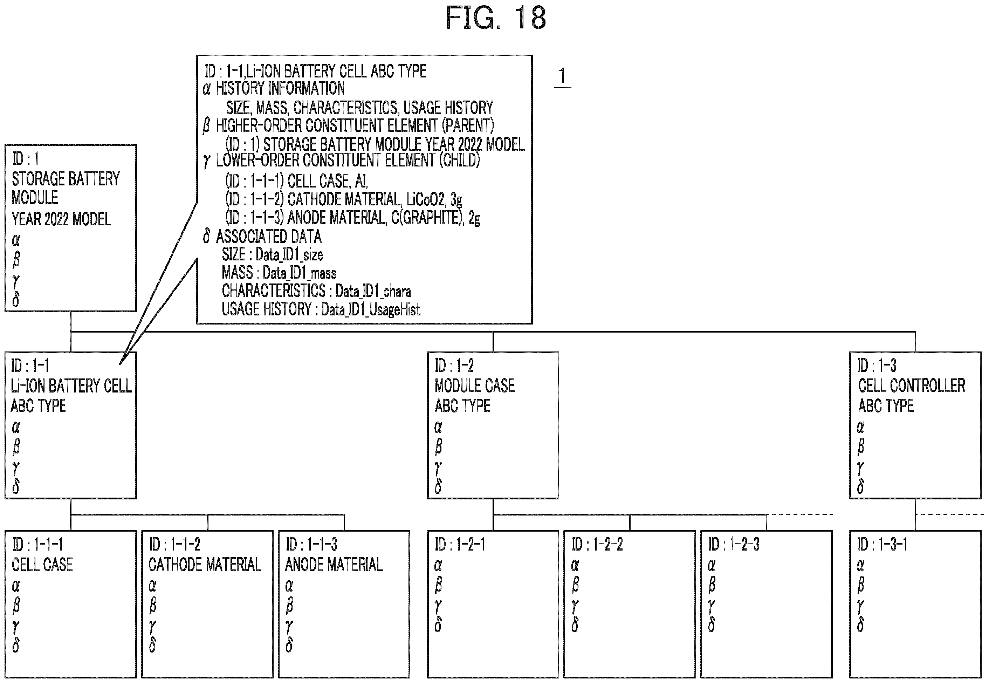

When power running/regenerating the actual car 11a, the actual car control unit 13 exercises ES-oriented control so as to minimize receiving power from the power supply unit 16. For this purpose, aside from electric power inputted/outputted between the traction motor 117 (FIG. 18) and the main circuit storage battery 123, electric power outputted to the auxiliary power system (APS_DC/AC) 124 and the auxiliary equipment 118 (FIG. 18) is appropriately controlled and consumption of electric power outputted from the secondary winding the traction transformer 121 is thereby minimized to reduce receiving power from the power supply unit 16. As a result, by purchasing excellence in energy efficiency intrinsic to railway and further ES, the actual car 11a is capable of contributing realization of a sustainable society.

FIG. 17 is a functional block diagram illustrating in more detail a configuration of the actual car 11a in FIG. 16. With respect to a part already described with reference to FIG. 5 or FIG. 16, a description thereof will be omitted and be given only to a difference. A main direct current circuit is formed between the AC/DC converter 122a and the DC/AC inverter 122b and a direct-current voltage signal detected at the direct-current voltage detectors 133a, 133b is inputted to the actual car control unit 13 for control.

The actual car control unit 13 includes a train control management system 141, an AC/DC converter control unit 142a, a DC/AC inverter control unit 142b, a storage battery control device 143, and an auxiliary power supply control device 144. Though illustration is omitted, the actual car control unit 13 is controlled by a control unit in higher order. The control unit in higher order is the core of operation and refers to an operation management system or a driver. The actual car control unit 13 is provided with control software and communicates a control signal with a control unit in higher order and controls a controlled unit in lower order as intended.

The main direct current circuit is connected with the main circuit storage battery 123 and an auxiliary power system 124. Direct-current voltage detectors 133c to 133d and direct current detectors 134a to 134c are connected to these elements and a direct-current voltage signal detected at these detectors is inputted to the actual car control unit 13 for control. The storage battery control device 143 controls the main circuit storage battery 123. The auxiliary power supply control device 144 controls the auxiliary power system 124 and controls the auxiliary equipment 118. The auxiliary equipment 118 is connected with direct-current voltage detectors 135a, 135b and a direct-current voltage signal detected at these detectors is inputted to the actual car control unit 13 for control.

Owing to this configuration, the following data can be collected:

AC/DC converter: control frequency, input current/voltage, output current/voltage, power unit temperature estimation value

DC/AC inverter: control frequency, input current/voltage, output current/voltage, power unit temperature estimation value

Auxiliary power system: control frequency, input current/voltage, output current/voltage, power unit temperature estimation value

Main circuit storage battery: charge/discharge current, voltage, SOC, SOH, cell temperature

Train control management system: state of each device, vehicle occupancy, temperature/room temperature

The present upcycle system collects these pieces of data and exhibits such action and effect as to enhance the functions of control software.

FIG. 18 is a drawing illustrating an example of an ID system that enables the traceability of hardware/software of the parallel analysis system in FIG. 1. The traceability refers to tracking procurement, production, consumption, up to discard of the raw materials of a product. The ID system in FIG. 18 has the following requirements and appropriately executes the requirements.

· Assign ID to each element of a module, a part, and a material in a layered structure.

· Allocate electronic record chart information to all the IDs and manage the information.

· The electronic record chart is a "copy of family register" of each constituent element and contains information (higher-order constituent element, lower-order constituent element) that enables a parent-child relation to be traced.

· Record own history based on actual use data in preparation for upcycle. As recorded data, separately accumulated big data is assumed and "associated data" for this data access is recorded in an electronic record chart. That is, access to history for execution of upcycle is enabled.

· When upcycle is performed, a change in parent-child relation is added together with the details of own change. That is, when upcycle is performed, a parent-child relation to be changed is recorded to ensure traceability.

As mentioned above, in the present upcycle system, an effect of implementation of upcycle is obtained by combining "electronic record chart" and "copy of family register", and "history" provided by the ID system. In the ID system in FIG. 18, in lower order of ID: 1 storage battery year 2022 model, a parent-child relation to ID: 1-1 Li-ion battery cell ABC type, ID: 1-2 module case ABC type, ID: 1-3 cell controller ABC type, ..., is formed. With respect to positioning of these parent-child relations, for example, ID: 1 (level A) is assigned to a final product; ID: 1-1 (level B) is assigned to a part constituting a product, and ID: 1-1-1 (level C) is assigned to a material constituting a part. These levels need not be divided in three and the levels may be divided into two or less or may be divided into four or more depending on an actual configuration of the highest level A.

Further, in lower order of ID: 1-1, a parent-child relation to ID: 1-1-1, ..., ID: 1-1-3, ..., is formed. Similarly, in lower order of ID: 1-2, a parent-child relation to ID: 1-2-1, ..., ID: 1-2-3, ..., is formed. Similarly, in lower order of ID: 1-3, a parent-child relation to ID: 1-3-1, ..., is formed. Therefore, ID: 1-1-1, - , ID: 1-3-1 is in a grandchild relation to ID: 1-1.

In the first child ID: 1-1 in the ID system in FIG. 18, with respect to Li-ion battery cell ABC type, the following pieces of information are systematized and stored in the storage unit 233 in a rewritable and retrievable manner. Information may be available from any other storage unit than the storage unit 233 by communication.

$\alpha$ History information _ size, mass, characteristics, usage history

$\beta$ Higher-order constituent element (parent) _ (ID: 1) storage battery module year 2022 model

$\gamma$ Lower-order constituent element (child) _ (ID: 1-1-1) cell case, AI, / (ID-1-1-2) cathode material, LiCo02, 3g/ (ID: 1-1-3) anode material, C (graphite), 2g

$\delta$ Associated data _ size: Data_ID1_size/mass: Data_ID1_mass/ Characteristics: Data_ID1_chara/ Usage history: Data_ID1_UsageHist

As described up to this point, the present upcycle system enhances the performance of the whole of a target product, including upcycle of software, and further, lengthens the life thereof to reduce wastes. Even reduced wastes are recycled and further, the quality thereof is altered to a circulatable product that continuously preserves environments and the value of a product is enhanced.

As a result, the present upcycle system upcycles and optimally maintains a storage battery and thereby implements carbon neutrality by an ES effect and lengthens the life of the storage battery; further, the present upcycle system propels circular economy due to an effect of wastes reduction by recycling and thereby contributes to the realization of a sustainable society.

Third Embodiment

In relation to the third embodiment, a description will be given to the present upcycle system that verifies the performance enhancement of a storage battery and assists in determination of timing and appropriateness of update based on an example different from that of the second embodiment.

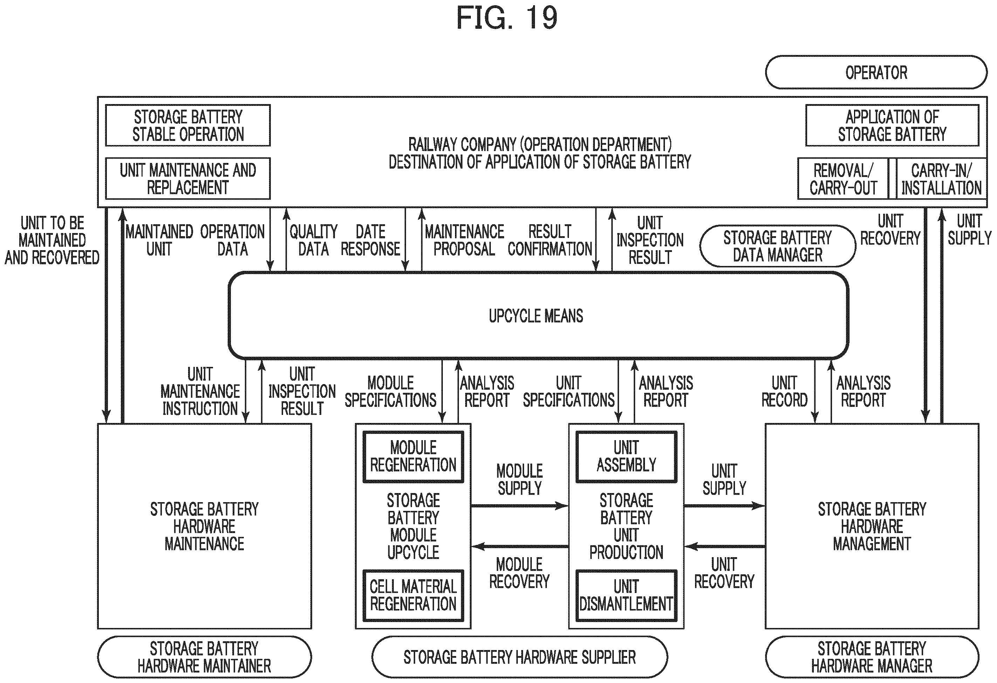

FIG. 19 is a conceptual explanatory drawing explaining a circulation system of a storage battery in the upcycle system in the third embodiment.

Here, a storage battery is used by an operator. The operator is a railway company (operation department) and mounts a storage battery in a car and uses the storage battery as a power source. In this case, therefore, the railway company (operation department) can also be referred to as a destination of application of the storage battery. A storage battery is maintained and replaced by unit of storage battery unit in which a plurality of storage battery modules is housed.

A storage battery unit is maintained by a storage battery hardware maintainer. The storage battery hardware maintainer performs maintenance by dismantling a storage battery unit and replacing storage battery modules constituting the storage battery unit in accordance with a request or the like from a storage battery hardware manager. In FIG. 19, this work is shown as storage battery hardware maintenance. A storage battery unit to be maintained is removed from a car as a unit to be maintained and recovered and is sent to a storage battery manager. Then, a storage battery hardware maintainer performs storage battery hardware maintenance of the unit to be maintained and recovered. A maintained storage battery unit is sent to the operator as a maintenance completed unit and mounted in a car again and put to use.

A storage battery unit is managed by a storage battery hardware manager. The storage battery hardware manager has an ownership right to the storage battery unit. The storage battery hardware manager recovers a storage battery unit from an operator as required (unit recovery). Further, the storage battery hardware manager provides a storage battery unit to an operator as required (unit provision).

A storage battery unit owned by a storage battery hardware manager is further recovered and supplied by a storage battery hardware supplier. The storage battery hardware supplier produces and upcycles a storage battery unit. In "production", the storage battery hardware supplier recovers a storage battery unit from a storage battery hardware manager (unit recovery) and dismantles the storage battery unit into storage battery modules (unit dismantlement). Meanwhile, regenerated storage battery modules are used to produce a storage battery unit (unit assembly). The produced storage battery unit is supplied to a storage battery hardware manager (unit supply). In "upcycle", storage battery modules are recovered (module recovery) and cell materials are regenerated (cell material regeneration). As a result, storage battery modules are regenerated (module regeneration) and the regenerated storage battery modules are supplied for production of a storage battery unit (module supply).

Among an operator, a storage battery hardware maintainer, a storage battery hardware manager, and a storage battery hardware supplier, storage battery data management is performed using an upcycle means having a server or the like that manages storage batteries. As storage battery data management, for example, data of storage batteries as a product and the materials of storage batteries is managed. Specifically, operation data and quality data of storage battery units are communicated with an operator. When maintenance is proposed from a storage battery data manager, the maintenance proposal is sent to an operator and date is answered for the maintenance proposal. Further, information about unit maintenance and unit investigation is communicated with an operator or a storage battery hardware maintainer. Furthermore, information about storage battery module specifications (module specifications), storage battery unit specifications (unit specifications), and an analysis report is communicated with a storage battery hardware supplier. Then, information of a record of unit supply, recovery, and maintenance and an analysis report is communicated with a storage battery hardware manager. Storage battery data management performed by an upcycle means is in accordance with Battery Passport (data management for product and material) that records information related to a lifecycle of a storage battery from material procurement to recycle. An operator, a storage battery hardware maintainer, a storage battery hardware manager, and a storage battery hardware supplier access an upcycle means and share information among them.

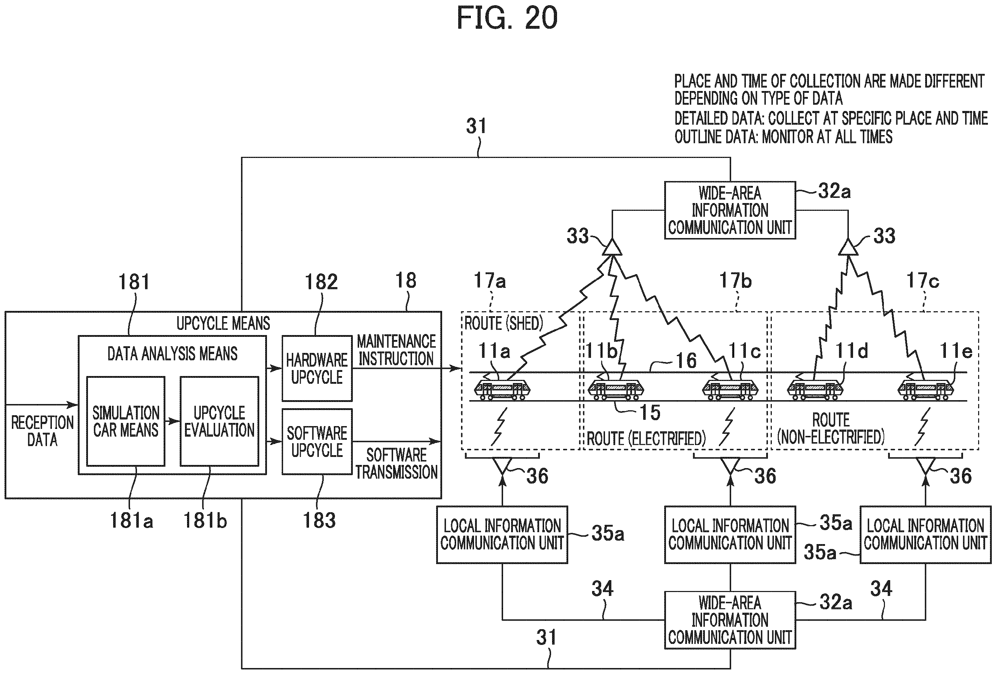

FIG. 20 is a schematic explanatory drawing illustrating another example of the information transmission unit 3 shown in FIG. 5.

Hereafter, a description will be given mainly to a difference from FIG. 5.

In contrast to the schematic explanatory drawing shown in FIG. 5, in FIG. 20, a wire-area information communication unit 32a is used in place of the wide-area information transmission unit 32. A local information communication unit 35a is used in place of the local information transmission unit 35. Further, an upcycle means 18 is used in place of the simulation car field 2. Here, a route is classified into three, shed, electrified section, and non-electrified section and information from respective routes is communicated. That is, routes are classified into route (shed) 17a, route (electrified) 17b, and route (non-electrified) 17c and information is communicated. The other respects are the same as those in FIG. 5.

The wide-area information transmission unit 32 and the wide-area information communication unit 32a are substantially identical in functionality but with respect to the wide-area information communication unit 32a, it is clarified that a function of communicating information is provided. Similarly, the local information transmission unit 35 and the local information communication unit 35a are substantially identical in functionality but with respect to the local information communication unit 35a, it is clarified that a function of communicating information is provided.

The upcycle means 18 upcycles hardware and software. Specifically, actual running data is received from an actual car 11 through the wide-area information communication unit 32a, local information communication unit 35a, and local information communication base 36 by radio communication. At this time, actual running data is received for each route (shed) 17a, route (electrified) 17b, and route (non-electrified) 17c. The received actual running data (reception data) is compared with simulation by a simulation car means 181a provided in a data analysis means 181. Using a result of comparison, upcycle evaluation is performed at an upcycle evaluation 181b. Based on the upcycle evaluation, hardware upcycle 182 as upcycle with hardware and software upcycle 183 as upcycle with software are performed. Examples of the hardware upcycle 182 are maintenance and update of storage battery hardware. Examples of the software upcycle 183 are update of control software that controls a storage battery system and control software that controls a driving system driven on electric power from a storage battery system.

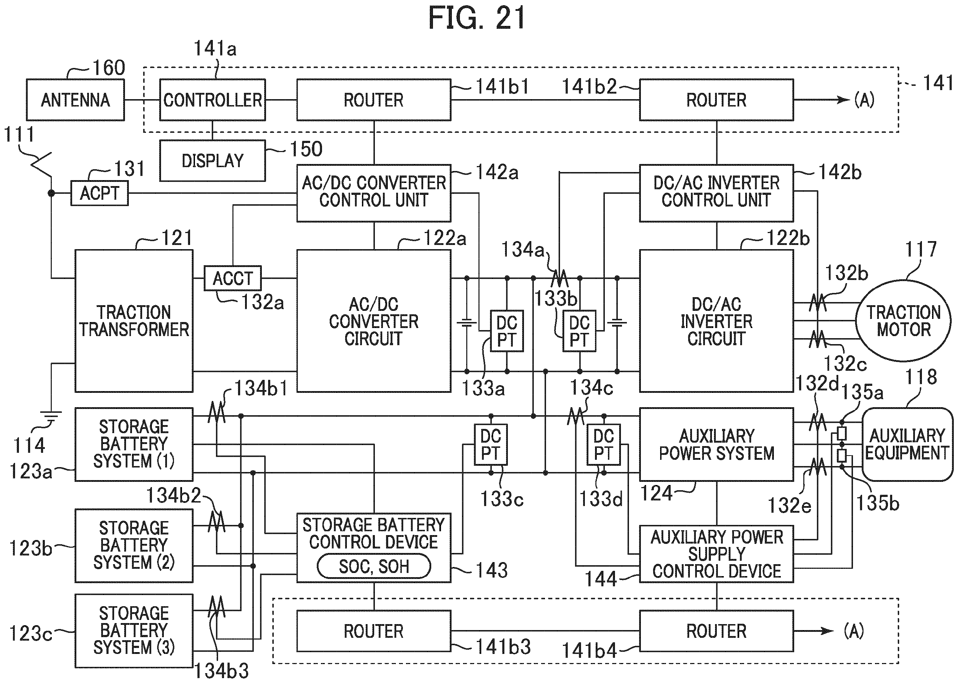

FIG. 21 is a block diagram illustrating a configuration of a driving system for an actual car 11 obtained when the main circuit storage battery 123 in FIG. 17 is comprised of a plurality of storage battery systems.

Hereafter, a description will be given mainly to a difference from FIG. 17.

This example shows a case where the main circuit storage battery 123 in FIG. 17 is comprised of a plurality of storage battery systems, a storage battery system (1) 123a, a storage battery system (2) 123b, and a storage battery system (3) 123c. When these storage battery systems are not discriminated, hereafter, they may be simply referred to as a storage battery system sometimes. As a result, the direct current detector 134b in FIG. 17 is connected with three direct current detectors 134b1 to 134b3.

This example shows a case where the train control management system 141 is connected with a display 150 and an antenna 160. The display 150 displays collected data. As described with reference to FIG. 17, examples of this data are control frequency, input current/voltage, output current/voltage of an AC/DC converter and a DC/AC inverter, power unit temperature estimation value, and the like. The antenna 160 communicates with the wide-area information communication unit 32a, local information communication unit 35a, and local information communication base 36 described with reference to FIG. 20. The display 150 is not indispensable to an actual car 11.

The train control management system 141 includes a controller 141a and routers 141b1, 141b2, 141b3, 141b4. The controller 141a controls the AC/DC converter control unit 142a, DC/AC inverter control unit 142b, storage battery control device 143, and auxiliary power supply control device 144. The routers 141b1, 141b2, 141b3, 141b4 respectively collect data from the AC/DC converter control unit 142a, DC/AC inverter control unit 142b, storage battery control device 143, and auxiliary power supply control device 144 and outputs a control signal from the controller 141a.

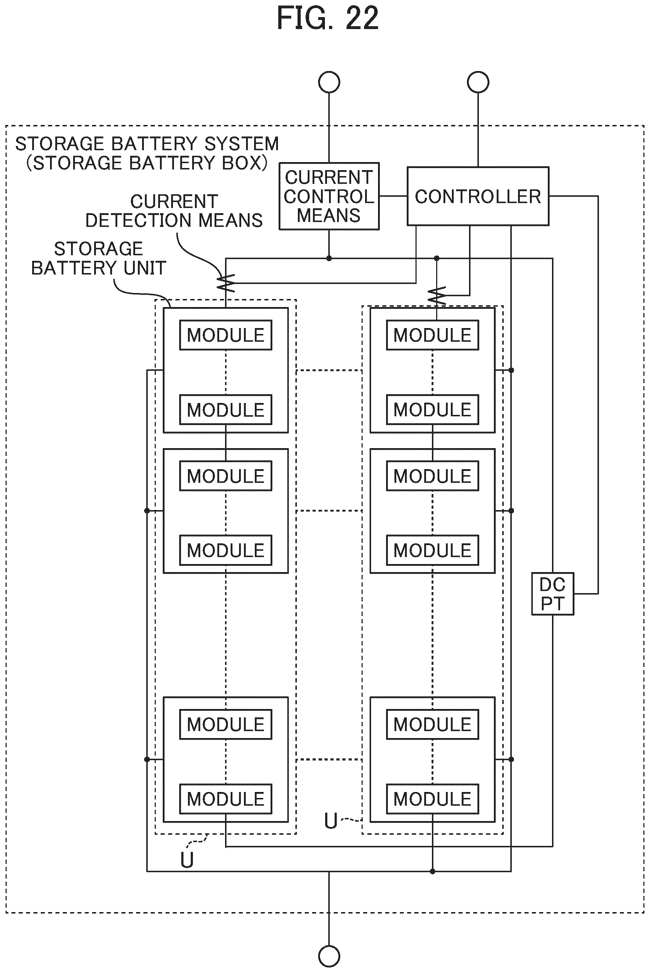

FIG. 22 is a drawing showing an internal configuration of a storage battery system.

The storage battery system is also referred to as storage battery box. In a storage battery system, a plurality of storage battery units is connected in series and a plurality of the storage battery units connected in series is further connected in parallel. Each storage battery unit is comprised of a plurality of storage battery modules. Though not shown in the drawing, each storage battery module is comprised of a plurality of storage battery cells. In FIG. 22, a plurality of storage battery units connected in series is shown as a series unit U. This example shows that a plurality of series units U is connected in parallel. Each series unit U is provided with a current detection means. A direct-current voltage detection means (DCPT) detects an output voltage of a storage battery system (series unit U). A current control means controls an output current of a storage battery system. A controller of a storage battery system controls the current control means based on the current detection means and the direct-current voltage detection means. As a result, conduction and disconnection of an output current of a storage battery system can be continuously controlled. The current control means may be a breaker that switches between conduction and disconnection.

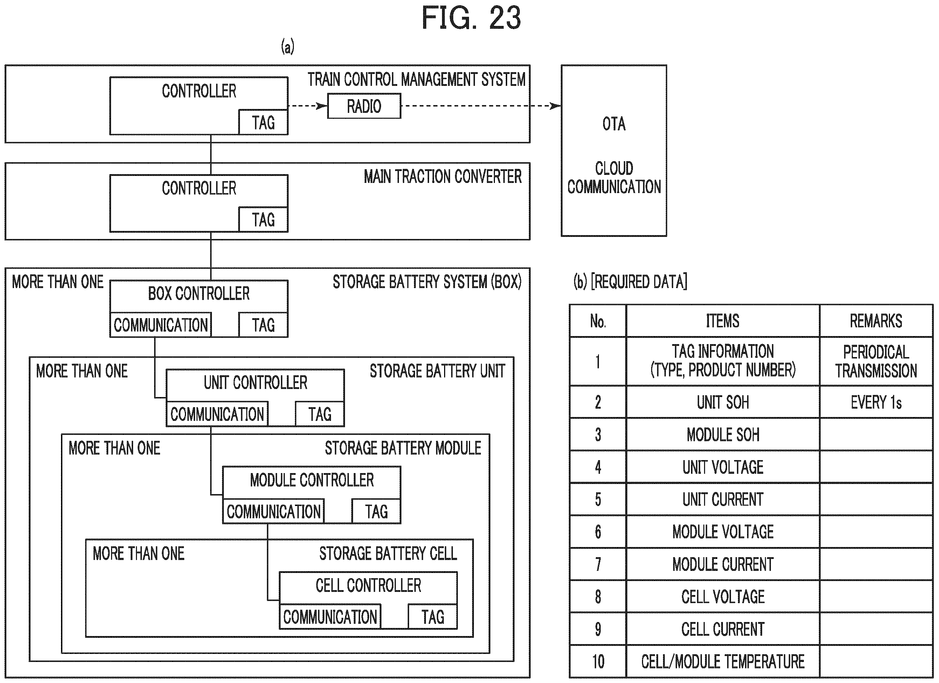

FIG. 23(a) is a drawing illustrating a configuration of a controller that collects data from a storage battery system.

As described with reference to FIGS. 21 and 22, the main circuit storage battery 123 is comprised of a plurality of storage battery systems. A plurality of the storage battery systems is, for example, the storage battery system (1) 123a to storage battery system (3) 123c in FIG. 21. Each storage battery system is comprised of a plurality of storage battery units. Each storage battery unit is comprised of a plurality of storage battery modules. Each storage battery module is comprised of a plurality of storage battery cells.

Each storage battery system is provided with a box controller. Each storage battery unit is provided with a unit controller. Each storage battery module is provided with a module controller. Each storage battery cell is provided with a cell controller. The box controllers, unit controllers, module controllers, and cell controllers are provided with a communication I/F (communication interface, shown as "communication" in FIG. 23(a)) and a tag. The communication I/F communicates data with these controllers. The tag contains, as tag information, a type and a model number of a storage battery system, each storage battery unit, storage battery module and storage battery cell and enables an output source of collected data to be identified. The tag information may be ID shown in FIG. 18 and FIGS. 24 and 25 referred to later. Data collected by these controllers is collected by a controller provided in a main traction converter and is further acquired by a controller provided in the train control management system and is then sent to the upcycle means 18 utilizing such radio communication as described with reference to FIG. 20. This example shows a case where an OTA (Over The Air) cloud communication is utilized as radio communication.

FIG. 23(b) shows required data that is required as quality data of a storage battery.

This example shows that data corresponding to No. 1 to No. 10 and indicated as item is required data. That is, tag information (type, model number), a unit SOH that is SOH (State of Health: storage battery deterioration indicator) of a storage battery unit, a module SOH that is SOH of a storage battery module, a unit voltage that is a voltage of a storage battery unit, a unit current that is a current of a storage battery unit, a module voltage that is a voltage of a storage battery module, a module current that is a current of a storage battery module, a cell voltage that is a voltage of a storage battery cell, a cell current that is a current of a storage battery cell, and a cell/module temperature that is a temperature of a storage battery cell or a storage battery module are taken as required data. Remarks is a reference column. This example means that tag information (type, model number) is periodically transmitted and a unit SOH is acquired every 1s.

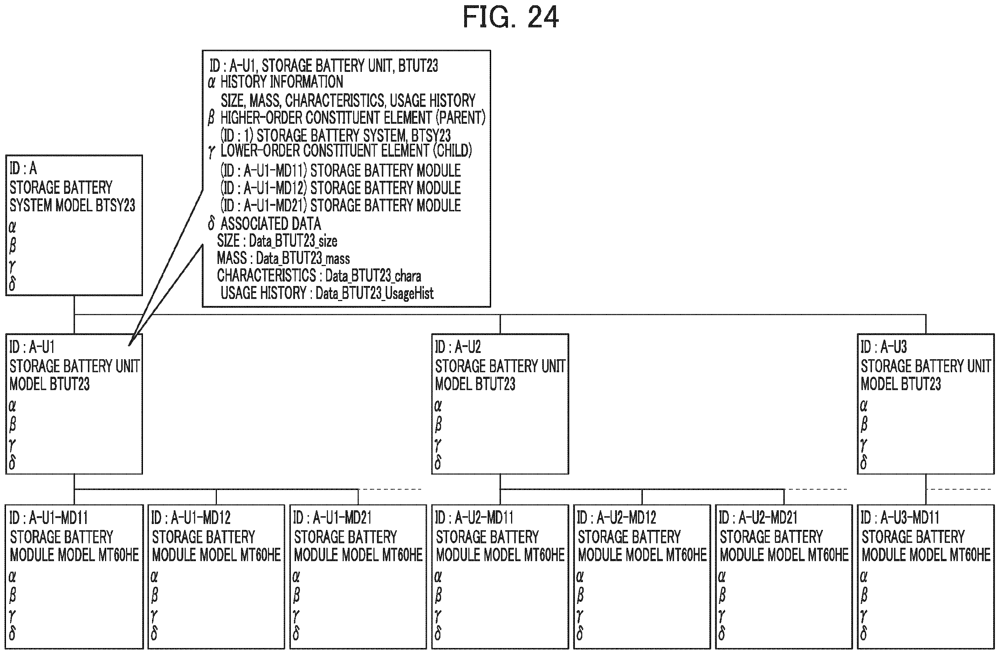

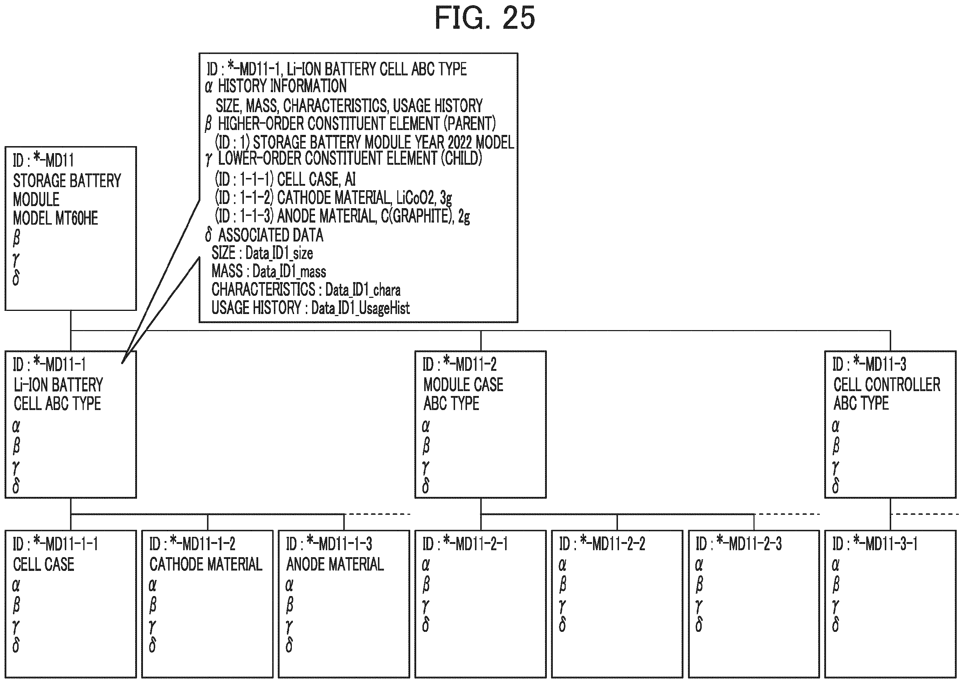

FIGS. 24 and 25 are drawings illustrating an example of an ID system that enables traceability in the third embodiment.

FIG. 24 illustrates an example of an ID system for a storage battery module or higher levels. That is, FIG. 24 illustrates an example of an ID system related to a storage battery system, a storage battery unit constituting a storage battery system, and a storage battery module constituting a storage battery unit.

FIG. 25 illustrates an example of an ID system related to a storage battery module or lower levels. This drawing illustrates an example of an ID system related to a storage battery module, a storage battery cell constituting a storage battery module, a storage battery module case as a case of a storage battery module, a cell controller, a cell case as a case of a cell, a cathode material of a cell, and an anode material of a cell.

This ID system has the same configuration as that of the ID system shown in FIG. 18. That is, ID is assigned to each element of a storage battery system, a part, and a material in a layered structure and electronic record chart information is allocated to all the IDs and managed. An electronic record chart contains record chart information (higher-order constituent element, lower-order constituent element) that allows a parent-child relation to be tracked.

Specifically, in FIG. 24, ID is assigned to each storage battery system, each storage battery unit, and each storage battery module respectively in a layered structured. In this case, ID of a storage battery system is A. IDs of the individual storage battery units constituting this storage battery system are A-U1, A-U2, A-U3. Further, for example, IDs of storage battery modules constituting a storage battery unit having ID of A-U1 are A-U1-MD11, A-U1-MD12, A-U1-MD21, ..., and electronic record charts corresponding to these IDs are provided. Pieces $\alpha$ to $\delta$ of record chart information are allocated to the individual electronic record charts. This electronic record chart contains record chart information $\beta, \gamma$ as record chart information that allows a parent-child relation to be tracked. The record chart information $\beta$ is information indicating a higher-order constituent element as parent. The record chart information $\gamma$ is information indicating a lower-order constituent element as child. The record chart information $\alpha$ is history information containing size, mass, characteristics, and usage history. The record chart information $\delta$ is information indicating associated data recording size, mass, characteristics, and usage history.

In FIG. 25, ID is assigned to each storage battery system, each storage battery unit, and each storage battery module respectively in a layered structure. IDs are assigned to storage battery modules, storage battery cells, storage battery module cases, cell controllers, cell cases, cathode materials of cells, and anode materials of cells respectively in a layered structure. In this case, in "*", ID of a storage battery unit in which a storage battery module is housed is placed. For example, when ID of a storage battery unit is A-U1, *-MD11 shown as ID of a storage battery module constituting this storage battery unit is actually A-U1-MD11. In this example, respective IDs of a storage battery cell, a storage battery module case, a cell controller, a cell case, a cathode material of a cell, and an anode material of a cell are *-MD11-1, *-MD11-2, *-MD11-3, *-MD11-1-1, *-MD11-1-2, and *-MD11-1-3.

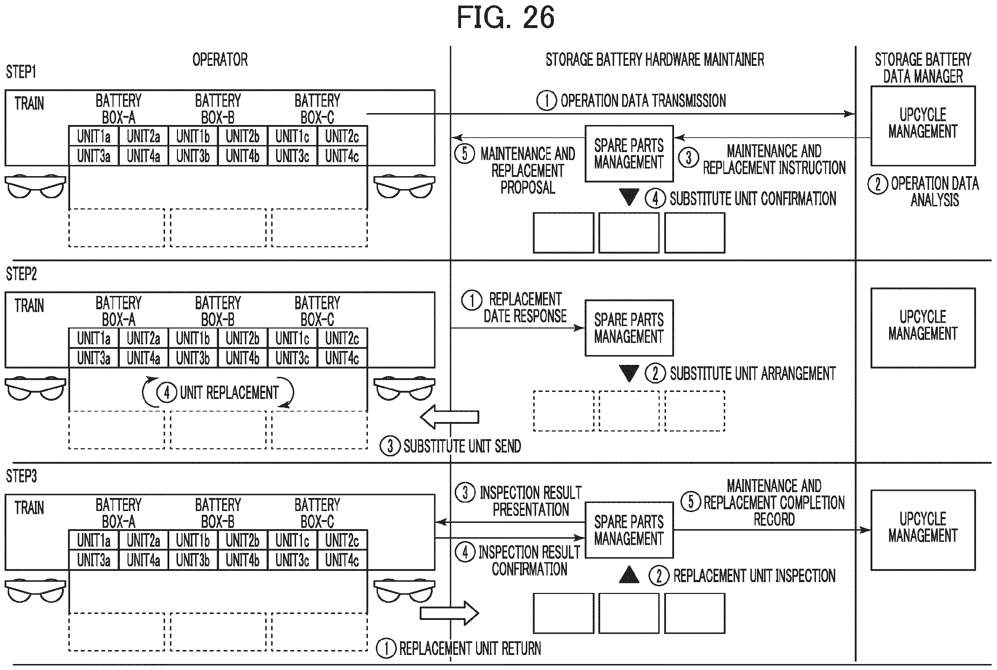

FIG. 26 is a step diagram illustrating a maintenance and replacement process for a storage battery system.

FIG. 26 shows a maintenance and replacement process for a storage battery system in three steps, Step 1 to Step **3**. This drawing shows mutual action among an operator who uses storage batteries, a storage battery hardware maintainer who maintains storage batteries, and a storage battery data manager whose performs upcycle management.

Step 1 is a process until the storage battery hardware maintainer proposes maintenance and replacement of a storage battery. At Step 1, operation data is transmitted from the operator to the storage battery data manager. Subsequently, the storage battery data manager analyses the operation data. When a result of analysis reveals that a storage battery requires replacement, the storage battery data manager issues a storage battery maintenance and replacement instruction to the storage battery hardware maintainer. The storage battery hardware maintainer checks a substitute unit and proposes storage battery maintenance and replacement to the operator. The substitute unit is a storage battery unit prepared as a substitute for a storage battery unit mounted in a car 11.

Step 2 is a process until the storage battery hardware maintainer sends the substitute unit for the storage battery. At Step 2, the operator whose was proposed of storage battery maintenance and replacement from the storage battery hardware maintainer responds replacement date to the storage battery hardware maintainer. Subsequently, the storage battery hardware maintainer arranges the substitute unit. Then, the storage battery hardware maintainer sends the substitute unit from a storage battery unit storage area to the operator's shed. Further, the storage battery hardware maintainer replaces the storage battery unit at the operator's shed.

Step 3 is a process until the storage battery data manager receives a maintenance and replacement completion record. At Step 3, at the operator's shed, the storage battery hardware maintainer returns the removed replacement unit to the storage battery unit storage area. The replacement unit is a storage battery unit that had been mounted in a car 11 and was removed from the car 11 for installation of the substitute unit. Subsequently, the storage battery hardware maintainer inspects the replacement unit at the storage battery unit storage area. A result of inspection is presented to the operator and the operator confirms the result of inspection. The storage battery hardware maintainer sends a maintenance and replacement completion record to the storage battery data manager. As a result, the maintenance and replacement completion record becomes accessible also to a storage battery hardware manager.

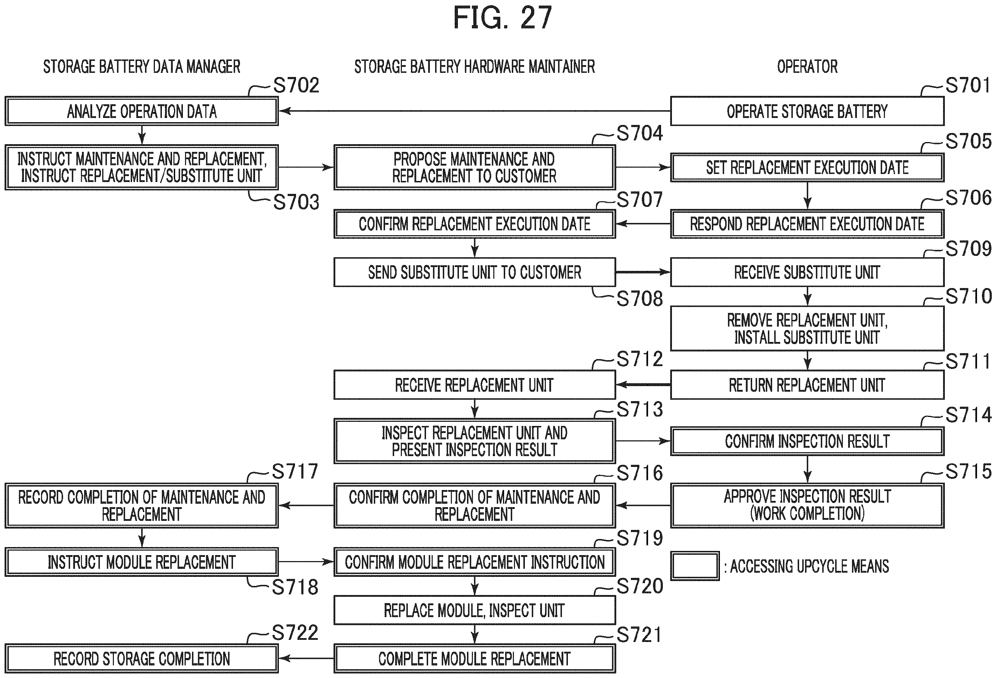

FIG. 27 is a flowchart illustrating a maintenance and replacement process for a storage battery system.

First, an operator operates a storage battery (S701). That is, the operator uses the storage battery unit mounted in a car 11 as a power source.

Operation data obtained when the storage battery is operated is sent to an upcycle means of a storage battery data manager and the storage battery data manager analyzes the operation data by the upcycle means (S702).

When a result of analysis reveals that a storage battery requires replacement, the storage battery data manager issues a maintenance and replacement instruction for the storage battery to a storage battery hardware maintainer through the upcycle means. At this time, the storage battery data manager simultaneously instructs to prepare a replacement/substitute unit (S703).

A storage battery hardware maintainer proposes storage battery maintenance and replacement to the operator through the upcycle means (S704).

The operator sets storage battery replacement execution date with the upcycle means (S705) and responds the replacement execution date to the storage battery hardware maintainer through the upcycle means (S706).

The storage battery hardware maintainer receives replacement execution date from the operator through the upcycle means and confirms the date (S707) and sends the substitute unit from a warehouse for storage battery units to the shed of the customer (operator) (S708).

When the operator receives the substitute unit at the operator's shed (S709), at the operator's warehouse, the storage battery hardware maintainer removes the replacement unit and installs the substitute unit (S710).

Further, the storage battery hardware maintainer returns the replacement unit removed at the operator's warehouse to the warehouse for storage battery units (S711).

At the warehouse for storage battery units, the storage battery hardware maintainer receives the replacement unit (S712).

The storage battery hardware maintainer inspects the received replacement unit (S713) and inputs a result of inspection to the upcycle means and presents the result to the operator (S713).

The operator confirms the result of inspection from the upcycle means (S714) and approves the result of inspection (work completion) through the upcycle means (S715).

When the operator approves the result of inspection, the storage battery hardware maintainer confirms the completion of storage battery maintenance and replacement through the upcycle means (S716).

The storage battery hardware maintainer sends a record of maintenance and replacement completion to the storage battery data manager through the upcycle means and the storage battery data manager receives the record (S717). As a result, the maintenance and replacement completion record becomes accessible also to a storage battery hardware manager. A battery hardware manager can confirm a record of supply and recovery of a predetermined unit with the upcycle means and can confirm a state (car mounted with a desired unit, storage area, etc.) of the desired unit.

Subsequently, the storage battery data manager issues an instruction to replace a storage battery module of the replacement unit to the storage battery hardware maintainer through the upcycle means as required (S718).

The storage battery hardware maintainer instructed from the upcycle means replaces a storage battery module (S719). The storage battery hardware maintainer inspects the storage battery unit whose storage battery module as been replaced (S720). The storage battery hardware maintainer inputs a storage battery unit inspection record and that the storage battery module replacement has been completed to the upcycle means and stores the storage battery unit in the warehouse (S721).

The storage battery data manager receives a record of storage battery unit storage completion from the upcycle means (S722). As a result, the storage battery inspection record and the record that storage battery module replacement has been completed becomes accessible also to the storage battery hardware manager. The battery hardware manager can confirm a record of maintenance of a predetermined unit and can confirm a state (configuration of a storage battery module, etc.) of a desired unit with the upcycle means.

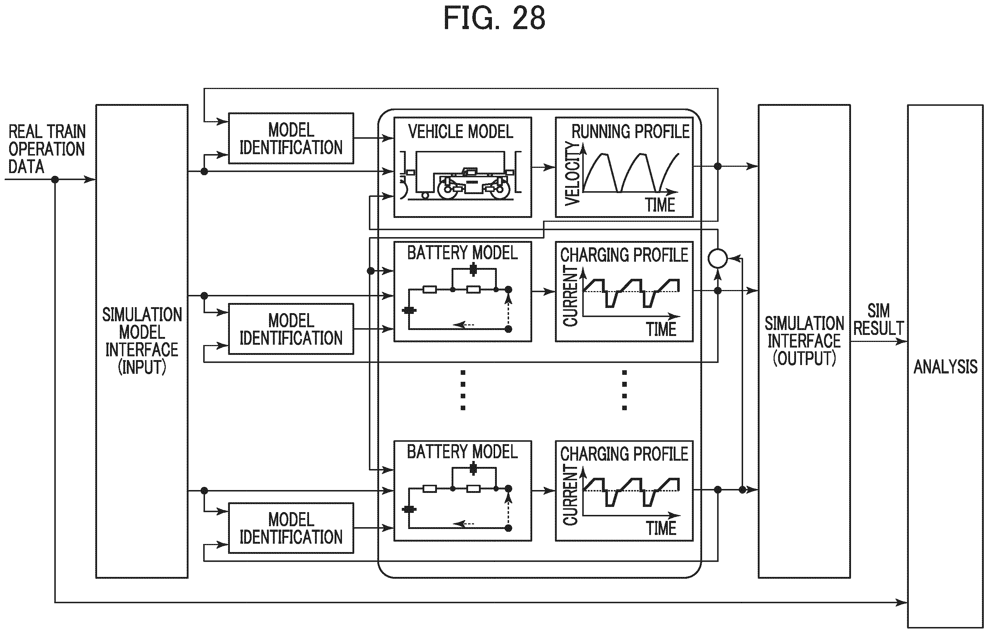

FIG. 28 is a drawing illustrating a configuration of a model (simulation model) simulating a charge/discharge operation of a storage battery system.

First, real train operation data is inputted.

The inputted operation data is converted into a predetermined data format at a simulation model interface (input).

A simulation by a vehicle model is performed based on the operation data and a running profile is computed. The running profile represents velocity versus time. This running profile is a result obtained by simulating a velocity change to time of a car based on the operation data. The computed running profile is compared with an actual operation of the car and model identification is performed based on a difference therebetween.

Meanwhile, a simulation by a battery model is performed based on the operation data and a charging profile is computed. The charging profile represents current versus time. This charging profile is determined for each series unit U shown in FIG. 22. This charging profile is a result obtained by simulating a change in current passed through the series unit U when a car is run with the above-mentioned running profile. The computed charging profile is compared with an actual current and a battery model is identified based on a difference therebetween.

A running profile and a charging profile are converted into a predetermined data format at a simulation model interface (output).

Then, the running profile and the charging profile are analyzed. An example of analysis of a charging profile is to compute SOH of each series unit U. Timing of replacement of a storage battery unit can be determined from this SOH. For analysis of a charging profile, SOH of a storage battery system may be computed. Further, by measuring voltages of a storage battery module and a storage battery cell, SOHs of the storage battery module and the storage battery cell can also be computed.

In the third embodiment, a target to which the railway upcycle system and the railway upcycle method are applied is a storage battery. A first digital twin model simulates a current of a storage battery mounted in a car 11. This is equivalent to processing of determining a charging profile in FIG. 28. The storage battery mounted in the car 11 corresponds to the replacement unit in FIGS. 26 and 27.

A second digital twin model simulates a current of a storage battery substituted for the storage battery mounted in the car 11. The storage battery substituted for the storage battery mounted in the car 11 corresponds to the substitute unit in FIGS. 26 and 27. When the substitute unit is a new or regenerated storage battery unit, a predetermined charging profile is applicable to a current of the substitute unit. With respect to a storage battery unit determined to need not be regenerated, a charging profile computed when the storage battery was mounted in the car 11 before is applicable.

With respect to upcycle evaluation, in the railway upcycle system and the railway upcycle method in the third embodiment, a degree of progression of deterioration in a storage battery is measured using SOH as evaluation indicator, for example, as in the second embodiment. The SOH can be computed by the method described with reference to FIG. 28. As a result, as in the second embodiment, not a storage battery replacement determination based on a result of arrival at a limit value of SOH, the following action is enabled: time of arrival at the limit value is predicted and upcycle of a storage battery is proposed while the storage battery is exhibiting desired performance.

Also, in the upcycle system in the third embodiment, upcycle of a storage battery and optimal maintenance are performed and carbon neutrality by an ES effect is thereby implemented and the life of the storage battery is thereby lengthened; further, circular economy due to an effect of wastes reduction is propelled by recycling and a contribution to the realization of a sustainable society is thereby made.

In the third embodiment, according to the circulation system described with reference to FIG. 19, upcycle is performed only when an upcycle evaluation based on data management for product and material is high. By comparing a degree of deterioration before update and performance enhancement after update by a digital twin when a storage battery is replaced, the appropriateness of replacement at that time is clarified. A degree of deterioration before update can be determined by the SOH described with reference to FIG. 28.

In the third embodiment, an operator, a storage battery manager, a storage battery hardware manager, and a storage battery hardware supplier access an upcycle means and share information related to storage batteries among them. As a result, a state of a storage battery, a maintenance and replacement proposal, information of movement of a maintenance result and the like can be shared and handled. As a result, a virtual space in which a state of a storage battery and future movement are determined can be provided. Further, resource history management corresponding to battery passport is enabled.

The present upcycle system can be summarized, for example, as follows:

[1] The present upcycle system is a railway upcycle system that includes a controller and a memory (storage unit) and performs upcycle of a railway system in accordance with a program in the memory. In the present upcycle system, the memory holds a digital twin model for simulation. The controller takes in operation data of a target to be upcycled belonging to the railway system. The controller sets a first digital twin model for simulating an operation of the target. The controller enhances the accuracy of the first digital twin model by adjusting a parameter. The controller builds a second digital twin model for an update target obtained by upcycling the target. The controller compares simulation results obtained when the first digital twin model and the second twin model are operated under identical conditions. Thus, the controller enables evaluation of upcycle.

The present upcycle system includes a target product, a digital twin, and a storage unit and is utilized to improve the target product by performing simulation by the digital twin with a computer. The target product is the whole of a railway system, that is, products related to railway and the products include software. The present upcycle system determines whether some of such products or software for controlling a product should be upcycled based on a result of simulation.

The digital twin is comprised of at least either of a mathematic model and software imagining a target product so that an operation of the target product can be simulated. The storage unit is a memory for a computer that can store information of a parameter and a state related to an operation of the target product and further stores a reference value for evaluating an outcome of upcycle.

In the present upcycle system, a reference value K is determined by an AI system or a human based on at least either of past performance information stored in the storage unit and equipment specifications. Upcycle updates at least either of a part of a target product and software. Simulation by a digital twin is performed before and after this upcycle.

When evaluation of the simulation exceeds the reference value (K in FIG. 9), the target product is actually upcycled. Further, the upcycle alters a parameter of a digital twin to enhance the accuracy thereof based on an operation data of the target product. As mentioned above, after the accuracy of a digital twin becomes sufficient, a digital twin of the target product and a new digital twin built when a part of the target product is renewed to a new device or new control are operated under identical conditions and results of this simulation are compared. When the result of comparison is favorable, the part of the target product is replaced with a new device or new control.

According to the upcycle system described above, the following effect is brought about: higher performance can be repeatedly ensured as compared with the conventional specification performance of the target product. As mentioned above, the present upcycle system makes it possible to verify each part, including environmental conservation, performance enhancement, up to recycle, before and after update by simulation using a digital twin to determine appropriateness of upcycle and propose a useful update plan.

Even after upcycling, the present upcycle system can perform further upcycle; therefore, as the result of such repeated upcycle as mentioned above, the effect of enhanced accuracy of simulation is brought about. Performance enhancement of an actual railway car contributes to the creation of a sustainable environment; therefore, the present upcycle system is advantageous also from this point of view.

[2] In the present upcycle system, by unit of at least either of an upcyclable member and upcyclable software, an already identified existing digital twin and a digital twin updated with a new function and newly generated are combined into one digital twin. According to the foregoing, with respect to an actual car and an identified model (known part), only an upcycled part (new function) model is altered; as a result, evaluation can be performed with attention paid onto the new functional part.

[3] A target belonging to a railway system and a digital twin model corresponding thereto are supplied with a common ID and operation data is associated with the ID.

[4] Operation data used for adjustment of a parameter of a digital twin model contains operation information of a train, traffic control or operation, configuration information of a train, or equipment operation of a car. In the present upcycle system, ID (family register data) that enables the traceability of a product, a part, or a material is given to the following operation data: With respect to operation data, at least any of operation information (equivalent to train schedule) of a train, operation command (traffic control), configuration information of a train, and car/equipment operation (can vary depending on model) is associated with digital twins of different actual cars in common. With respect to usages, as $\alpha$ history information in FIG. 18, operation data common to each model (corresponding to car body, INV, control, or the like) is present and the operation data is as follows.

That is, with respect to operation data, at least any of CI (frequency, input/output current/voltage, PU (power unit) temperature), frequency, input/output current/voltage, PU (power unit) temperature of APS (Auxiliary Power System), storage battery (charge/discharge current, voltage, SOC, SOH, temperature), TCMS (state of each device, vehicle occupancy, temperature/room temperature), and member information (vibration, temperature, distortion) of the car is specifically associated with each of digital twins of different actual cars. Data required for model identification and evaluation is associated with ID (family register data) that implements the traceability of a product, a part, and a material required for upcycle.

These can be used to determine whether to upcycle before finish of use. When upcycle is performed, a recipe can be created. The recipe is used to directly use a part or reproduce a part in combination with another as material. The present upcycle system identifies, evaluates, and upcycles a digital twin with respect to the above-mentioned operation data and can cope with various situations.

The TCMS (Train control and Monitoring System) is a management system that has been enhanced in performance and functionality due to the development of information technology and has become indispensable to cars and implements energy saving by integrally controlling information of the entire train, rather than a single car, in cooperation with a ground device or by any other like means.

[5] Operation data used for adjustment of a parameter of a digital twin model contains: frequency, input/output current/voltage, or power unit temperature when a target is CI; optimization planning method when a target is APS; charge/discharge current, voltage, SOC, SOH, or temperature when a target is a storage battery; state of each device, vehicle occupancy, or temperature/room temperature when a target is TCMS; and vibration, temperature or distortion when a target is a member of a car.

[6] After it is determined that operation data of a target belonging to a railway system does not contain abnormality data arising from an accident or a failure, the present upcycle system adjusts a parameter of a digital twin model. According to the foregoing, not only history data of one car but also pieces of data of a plurality of cars (within a relevant set or a car in another set) are compared with each other to identify an abnormal spot and the abnormality data is removed; the accuracy of a digital twin model is thereby enhanced.

[7] The present upcycle system grasps degradation in performance by a time calendar-based simulation to predict timing of the performance degradation and decides and proposes value enhancement timing before deterioration begins in a target belonging to a railway system. According to the foregoing, performance is enhanced before a transition to a state considered as deterioration is made; continuous performance enhancement can be thereby provided for a long time and as a result, a recycling-oriented society can be constructed. Continuous performance enhancement refers to that a value equivalent to that at a new production time or higher is continuously provided without causing deterioration.

[8] The present upcycle system uses data of operation utilizing automatic train operation or a driver advisory system as operation data of a target belonging to a railway system. As a result, a model parameter can be conformed with a stable (known) operation profile; therefore, a digital twin is efficiently and accurately identified in a short time. In case of manual profile, meanwhile, model identification involves improper operation because of a difference in operation timing from human to human or for any other like reason; therefore, identification takes much time and variation is widened and this leads to lower accuracy.

[9] The present upcycle system prescribes an operation profile required for adjustment of a digital twin profile as at least either of operation profile for automatic train operation and operation profile for driver advisory system. As a result, a digital twin is efficiently and accurately identified in a short time. The effect of [7] mentioned above can be enhanced.

[10] The present upcycle system compares results of simulation in which other variable data than operation data of an actual car is inputted and thereby enables value enhancement to be evaluated. The variable data is not included in actual car operation data but is data within an allowable range in terms of specifications. According to the foregoing, appropriateness of upcycle can be determined also with cases other than normal time taken into account. By inputting operation data within an assumable range, the robustness of determination of appropriateness of upcycle (adjustment result in control) is enhanced.

[11] In the present upcycle system, a target of value enhancement is any of actual car, storage battery, driving control device, auxiliary power supply control device, fuel cell system, air conditioner, cab monitoring device, train control management system, passenger information system, seat, member of car, front monitoring device, safety monitoring device, driver advisory system, automatic operation control function, and control function for ground-on board radio information transmission.

The present upcycle system upcycles a product or software. Examples of products to be uncycled are storage battery and module product. Software to be upcycled are, as a function requiring customizing on a route-by-route basis, at least any of adhesion control, front monitoring sensitivity, DAS profile, ATO profile, hybrid energy management, storage battery current restriction, storage battery SOC range restriction, tractive force control by acceleration restriction, air brake blending control, equipment operation change-over point information. Examples of module products, software, and systems to be upcycled are safety monitoring device, seat, 5G_OTA (fifth-generation mobile communication_radio communication: Over-the-air), air conditioner, driverless system, fuel cell, driving device, storage battery, TCMS, and PIS.

With respect to software, the present upcycle system mentioned above enhances functionality before a transition to a state considered as deterioration is made and can thereby provide continuous function enhancement for a long time. With respect to hardware, the present upcycle system separates basic functions and custom functions from each other and thus, for example, customization and performance enhancement on a route-by-route basis are expected. That is, the present upcycle system is capable of implementing at least either of function enhancement (module update) matched with a customer and a route situation and pursuit of highest performance (parameter adjustment). As a result, a recycling-oriented society can be realized.

[12] In the present upcycle system, ID used for individual recognition is supplied to a target belonging to a railway system and a record chart is associated with the ID; the record chart is updated with the same contents of work execution as alteration work data. The record chart is updated with the same contents of work execution as alteration work data (replacement of some part of a product or the like). As a result, a method for ensuring traceability for indicating that upcycle has been implemented can be presented. By implementation of upcycle, the grade (quality) of a material can be maintained or enhanced.

As a result, the foregoing can contribute to quality assurance. "Product, part, and material of an actual car" and "product, part, and material in data space" are brought into one-to-one correspondence with each other by ID or the like; even when a configuration is altered in upcycle, it can be ensured that the initial quality is maintained or enhanced by tracking the alteration. That a configuration is altered means rearrangement from the material level.

[13] The present upcycle system automatically adjusts a parameter of control software on a digital twin model based on operation data and activates the automatically adjusted software according to a predetermined trigger. The predetermine trigger need not be manual operation and may be any opportunity, such as addressing a calendar or a train schedule, maintenance, and the like. Further, the present upcycle system optimizes control in real time by a digital twin function according to a running state. At this time, it is advisable to complement security in terms of operation; for example, even when software is downloaded to an actual car controller memory, the software is not activated unless a person in charge presses the "Confirm" button.

Control functions can be separated into standard functions (customization unnecessary, basic control of PWM and the like) and custom functions (adjustment required depending on the features of a route, adhesion control, DAS, and the like); the latter can be automatically identified to reduce the cost of software production. A train and a device can be temporarily made to accommodate subscription. The subscription method is known as a fixed rate charging method in which something can be freely utilized only for a term of contract. When a subscription method is adopted, parameter adjustment corresponding to each route is automated and thus optimization is implemented.

[14] In the present upcycle system, automatically adjusted parameters of control software are adhesion control, front monitoring sensitivity, driver advisory system profile, automatic train control profile, hybrid energy management, storage battery current restriction, storage battery SOC range restriction, tractive force control by acceleration restriction, air brake blending control, or equipment operation change-over point information.

[15] In the present upcycle system, a target is storage battery and a first digital twin model simulates a charge/discharge current of a storage battery mounted in a car 11. Actually, a charge/discharge current is simulated for each series unit U. In this case, a second digital twin model simulates a charge/discharge current of a storage battery substituted for a storage battery mounted in the car 11. In this case, with respect to upcycle evaluation, a degree of progression of deterioration in a storage battery is measured using SOH as an evaluation indicator. As a result, not a storage battery replacement determination based on a result of arrival at a limit value of SOH, the following action is enabled: time of arrival at the limit value is predicted and upcycle of a storage battery is proposed while the storage battery is exhibiting desired performance.

The upcycle generation method for a railway according to the embodiments of the present invention (hereafter, referred to as "the present generation method") can be summarized as follows: In the following description, "the present generation method" may be replaced with "upcycle method".

[16] The present generation method is a generation method for generating products including railway-related software while a target product is uncycled according to a result of simulation. That is, the present generation method includes the following processes and produces a target product.

A digital twin is configured in advance of at least either of a mathematic model and software imagining a target product. Parameters related to operation of a target product related to railway and information of a state thereof are stored in a storage unit of a computer in a readable manner. Further, a reference value for evaluating an outcome of upcycle is stored there. This reference value is determined by an AI system or a human based on at least either of stored past performance information and equipment specifications. When preparation has been completed, an operation of a target product is simulated by digital twin.

Simulation by digital twin is performed before and after upcycle for updating at least either of a part of a target product and software. Whether upcycle is required is determined (in case of "required", time of execution) based on a result of the simulation; when it is determined that upcycle is required, the target product is updated at the execution time.

According to the present generation method, the following effect is brought about: as compared with conventional specification performance of the target product, higher performance can be repeatedly ensured. In the present generation method, upcycle can be further performed even after upcycling; therefore, as the result of repeated upcycling mentioned above, an effect of enhanced accuracy of simulation is brought about.

List of Reference Signs

1: actual car field,
2: simulation car field,
3: information transmission unit,
11: actual car,
12: actual car driving unit,
13: actual car control unit,
14: actual car driving control unit,
15: rail,
16: power supply unit,
21: simulation car,
22: simulation car driving unit,
23: simulation car control unit,
24: simulation car driving control unit,
31: wide-area information transmission path,
32: wide-area information transmission unit,
33: wide-area information communication base,
34: local information transmission path,
35: local information transmission path,
36: local information transmission base,
111: operation command output unit,
112, 112a, 112b: truck,
113, 113a to 113d: wheelset,
114: power collector,
115: grounding device,
117: traction motor,
118: auxiliary equipment,

121: traction transformer,
122a: AC/DC converter,
122b: DC/AC inverter,
123: main circuit storage battery,
123a, 123b, 123c: storage battery system,
124: auxiliary power system (APS_DC/AC),
131: alternating-current voltage detector (ACPT),
132, 132a to 132e: alternating current detector (ACCT),
133, 133a to 133d, 135a, 135b: direct-current voltage detector,
134, 134a to 134c: direct current detector,
141: train control management system,
142a: AC/DC converter control unit,
142b: DC/AC inverter control unit,
143: storage battery control device,
144: auxiliary power supply control device,
231: car operation analysis unit,
232: control data analysis unit,
233: storage unit,
U: series unit

## Claims

1. A railway upcycle system including a controller and a memory, the controller and the memory building a digital twin environment simulating a railway system, which railway upcycle system performs value enhancement of the railway system in accordance with a program in the memory,
   wherein the controller:

   sets a first digital twin model simulating a target which belongs to the railway system and whose value is to be enhanced;
   takes in operation data of the target and thereby adjusts a parameter of the first digital twin model and enhances the accuracy of the first digital twin model;
   sets a second digital twin model simulating a target to be updated when the value of the target is enhanced; and
   compares results of simulation obtained when the first digital twin model and the second digital twin model are operated under identical conditions and thereby enables the value enhancement to be evaluated.

2. The railway upcycle system according to Claim 1,
   wherein one or more functions included in an identified existing digital twin model are updated with a new function to obtain a new digital twin model.

3. The railway upcycle system according to Claim 1 or 2,
   wherein a target belonging to a railway system and a digital twin model corresponding thereto are supplied with a common ID and operation data is associated with the ID.

4. The railway upcycle system according to any of Claims 1 to 3,

   wherein operation data used for adjustment of a parameter of a digital twin model
   contains train operation information, traffic control or operating manipulation, train configuration information, or car equipment operation.

5. The railway upcycle system according to any of Claims 1 to 4,
   wherein operation data used for adjustment of a parameter of a digital twin model contains:

   frequency, input/output current/voltage, or power unit temperature when the target is a driving control device;
   frequency, input/output current/voltage, or power unit temperature when the target is an auxiliary power supply control device;
   charge/discharge current, voltage, SOC, SOH, or temperature when the target is a storage battery;
   state of each device, vehicle occupancy, or temperature/room temperature when the target is a train control management system; and
vibration, temperature, or distortion when the target is a member of a car.

6. The railway upcycle system according to any of Claims 1 to 5,
wherein after it is determined that operation data of a target belonging to the railway system does not contain abnormality data arising from an accident or a failure, a parameter of a digital twin model is adjusted.

7. The railway upcycle system according to any of Claims 1 to 6,
wherein performance degradation is grasped by time calendar-based simulation to predict time of performance deterioration and time of value enhancement is decided and proposed before deterioration begins in a target belonging to the railway system.

8. The railway upcycle system according to any of Claims 1 to 7,
wherein for operation data of a target belonging to the railway system, data of operation utilizing automatic train operation or a driver advisory system is used.

9. The railway upcycle system according to Claim 8,
wherein an operation profile required for adjustment of a digital twin model is prescribed in advance as at least either of an operation profile for the automatic train operation and an operation profile for the driver advisory system.

10. The railway upcycle system according to any of Claims 1 to 9,
wherein by comparing the results of simulation in which other variable data than operation data of an actual car is also inputted, evaluation of the value enhancement is enabled.

11. The railway upcycle system according to any of Claims 1 to 10,
wherein a target of the value enhancement is any of:
actual car, storage battery, driving control device, auxiliary power supply control device, fuel cell system, air conditioner, cab monitoring device, train control management system, passenger information system, seat, member of car, front monitoring device, safety monitoring device, driver advisory system, automatic operation control function, and ground-on board radio information transmission control function.

12. The railway upcycle system according to any of Claims 1 to 11,
wherein a target belonging to the railway system is supplied with ID used for individual recognition and a record chart is associated with the ID; and the record chart is updated with the same contents of work execution as alteration work data.

13. The railway upcycle system according to any of Claims 1 to 12,
wherein a parameter of control software is automatically adjusted on a digital twin model based on operation data and the automatically adjusted software is activated according to a predetermined trigger.

14. The railway upcycle system according to Claim 13,
wherein an automatically adjusted parameter of the control software is adhesion control, front monitoring sensitivity, driver advisory system profile, automatic train control profile, hybrid energy management, storage battery current restriction, storage battery SOC range restriction, tractive force control by acceleration restriction, air brake blending control, or equipment operation change-over point information.

15. The railway upcycle system according to Claim 1,

wherein the target is a storage battery, and
the first digital twin model simulates a charge/discharge current of the storage battery mounted in a car.

16. The railway upcycle system according to Claim 15,
wherein the second digital twin model simulates a charge/discharge current of the storage battery substituted for the storage battery mounted in a car.

17. A railway upcycle method including a controller and a memory, the controller and the memory building a digital twin environment simulating a railway system, which railway upcycle method performs value enhancement of the railway system in accordance with a program in the memory,

wherein the controller:

sets a first digital twin model simulating a target which belongs to the railway system and whose value is to be enhanced;
takes in operation data of the target and thereby adjusts a parameter of the first digital twin model and enhances the accuracy of the first digital twin model;
sets a second digital twin model simulating a target to be updated when the value of the target is enhanced; and
compares results of simulation obtained when the first digital twin model and the second digital twin model are operated under identical conditions and thereby enables the value enhancement to be evaluated.

18. The railway upcycle method according to Claim 17,
wherein one or more functions included in an identified existing digital twin model are updated with a new function to obtain a new digital twin model.

19. The railway upcycle method according to Claim 17 or 18,
wherein a target belonging to a railway system and a digital twin model corresponding thereto are supplied with a common ID and operation data is associated with the ID.

20. The railway upcycle method according to any of Claims 17 to 19,

wherein operation data used for adjustment of a parameter of a digital twin model
contains train operation information, traffic control or operating manipulation, train configuration information, or car equipment operation.

21. The railway upcycle method according to any of Claims 17 to 20,
wherein operation data used for adjustment of a parameter of a digital twin model contains:

frequency, input/output current/voltage, or power unit temperature when the target is a driving control device;
frequency, input/output current/voltage, or power unit temperature when the target is an auxiliary power supply control device;
charge/discharge current, voltage, SOC, SOH, or temperature when the target is a storage battery;
state of each device, vehicle occupancy, or temperature/room temperature when the target is a train control management system; and
vibration, temperature, or distortion when the target is a member of a car.

22. The railway upcycle method according to any of Claims 17 to 21,
wherein after it is determined that operation data of a target belonging to the railway system does not contain abnormality data arising from an accident or a failure, a parameter of a digital twin model is adjusted.

23. The railway upcycle method according to any of Claims 17 to 22,
wherein performance degradation is grasped by time calendar-based simulation to predict time of performance deterioration and time of value enhancement is decided and proposed before deterioration begins in a target belonging to the railway system.

24. The railway upcycle method according to any of Claims 17 to 23,
wherein for operation data of a target belonging to the railway system, data of operation utilizing automatic train operation or a driver advisory system is used.

25. The railway upcycle method according to Claim 24,
wherein an operation profile required for adjustment of a digital twin model is prescribed in advance as at least either of an operation profile for the automatic train operation and an operation profile for the driver advisory system.

26. The railway upcycle system according to any of Claims 17 to 25,
wherein by comparing the results of simulation in which other variable data than operation data of an actual car is also inputted, evaluation of the value enhancement is enabled.

27. The railway upcycle method according to any of Claims 17 to 26,
wherein a target of the value enhancement is any of:

actual car, storage battery, driving control device, auxiliary power supply control device, fuel cell system, air conditioner, cab monitoring device, train control management system, passenger information system, seat, member of car, front monitoring device, safety monitoring device, driver advisory system, automatic operation control function, and ground-on board radio information transmission control function.

28. The railway upcycle method according to any of Claims 17 to 27,
wherein a target belonging to the railway system is supplied with ID used for individual recognition and a record chart is associated with the ID; and the record chart is updated with the same contents of work execution as alteration work data.

29. The railway upcycle method according to any of Claims 17 to 28,
wherein a parameter of control software is automatically adjusted on a digital twin model based on operation data and the automatically adjusted software is activated according to a predetermined trigger.

30. The railway upcycle method according to Claim 29,
wherein an automatically adjusted parameter of the control software is adhesion control, front monitoring sensitivity, driver advisory system profile, automatic train control profile, hybrid energy management, storage battery current restriction, storage battery SOC range restriction, tractive force control by acceleration restriction, air brake blending control, or equipment operation change-over point information.

31. The railway upcycle method according to Claim 17,

wherein the target is a storage battery, and
the first digital twin model simulates a charge/discharge current of the storage battery mounted in a car.

32. The railway upcycle method according to Claim 31,
wherein the second digital twin model simulates a charge/discharge current of the storage battery substituted for the storage battery mounted in a car.

33. A railway upcycle generation method including a controller and a memory, the controller and the memory building a digital twin environment simulating a railway system, which railway upcycle generation method performs value enhancement of the railway system in accordance with a program in the memory,
wherein the controller:

sets a first digital twin model simulating a target which belongs to the railway system and whose value is to be enhanced;
takes in operation data of the target and thereby adjusts a parameter of the first digital twin model and enhances the accuracy of the first digital twin model;
sets a second digital twin model simulating a target to be updated when the value of the target is enhanced; and
compares results of simulation obtained when the first digital twin model and the second digital twin model are operated under identical conditions and thereby enables the value enhancement to be evaluated,
the railway upcycle generation method generating a railway system with the value of the target enhanced.

# FIG. 1

# FIG. 2

# FIG. 3

ACTUAL CAR FIELD | SIMULATION CAR FIELD

**111** OPERATION COMMAND OUTPUT UNIT

COM OPERATION COMMAND

COASTING

**14** ACTUAL CAR DRIVING CONTROL UNIT

PRESENT POSITION

**233** DATA STORAGE UNIT

ROUTE INFORMATION

**23** SIMULATION CAR

VELOCITY

STARr STATE INFORMATION

VELOCITY

**231** CAR OPERATION ANALYSIS UNIT

STAs STATE INFORMATION

SIMULATION INFORMATION

RUNNING RESISTANCE COEFFICIENT

INFORMATION TRANSMISSION UNIT

# FIG. 4

# FIG. 5

PLACE AND TIME OF COLLECTION ARE MADE DIFFERENT
DEPENDING ON TYPE OF DATA
DETAILED DATA: COLLECT AT SPECIFIC PLACE AND TIME
OUTLINE DATA: MONITOR AT ALL TIMES

EP 4 516 628 A1

# FIG. 6

# FIG. 7

Δ Model

CORRECTION

CURRENT

A

PHYSICAL MODEL NO. 1

COMPARISON

[DATA MANAGEMENT FOR PRODUCT AND MATERIAL]

[ACTUAL CAR (PHYSICAL OBJECT) ENVIRONMENT]

OPERATION COMMAND

CURRENT

A

ACTUAL CAR NO. 1

OPERATION DATA
(VELOCITY, TEMPERATURE, VIBRATION, OPERATION TIME)

EP 4 516 628 A1

# FIG. 8

```
                                              ⌐S81
┌─────────────────────────────────────┐
│  BUILD PHYSICAL MODEL NO. 1 SIMULATING │
│          ACTUAL CAR NO. 1              │
└─────────────────────────────────────┘
```

S83

┌─────────────────────────┐
│  CORRECT PHYSICAL MODEL   │
│  ACCORDING TO $\Delta$ Model │
└─────────────────────────┘

COMPARE DIFFERENCE IN
OPERATION DATA BASED ON
OPERATION COMMAND OF
ACTUAL CAR

$\Delta$ Model =
OPERATION DATA
(PHYSICAL MODEL NO. 1) – OPERATION
DATA (ACTUAL CAR NO. 1)?

S82

$|\Delta \text{Model}| > \gamma$

$|\Delta \text{Model}| \leq \gamma$

S84

┌─────────────────────────────────────┐
│  PHYSICAL MODEL NO. 1 IDENTIFICATION   │
│             COMPLETED                  │
└─────────────────────────────────────┘

# FIG. 9

OPERATION COMMAND → FLUCTUATING FACTOR

PHYSICAL MODEL NO. 1 — CURRENT — A

PHYSICAL MODEL NO. 2 — NEW — A'

EVALUATION INDICATOR (E.G.: POWER CONSUMPTION)

COMPARISON → ΔFunc

+
−

K (REFERENCE VALUE)  (0)  (1) → UPOK

UPGRADE EVALUATION (IN CASE OF SMALLER-THE-BETTER EVALUATION INDICATOR)

[DATA MANAGEMENT FOR PRODUCT AND MATERIAL]

# FIG. 10

```
                                                    ┌─S11
┌──────────────────────────────────────────────┐
│  CHANGE (A -> A') OF FUNCTION OF PHYSICAL      │
│  MODEL NO. 1: PHYSICAL MODEL NO. 2             │
└──────────────────────────────────────────────┘

COMPARE PHYSICAL MODELS
NO. 1 AND NO. 2 BASED ON
OPERATION COMMAND
(INCLUDING FLUCTUATION)

                ΔFunc =                  ┌─S12
          EVALUATION INDICATOR
      (PHYSICAL MODEL NO. 1) − EVALUATION          UPOK=0
          INDICATOR (PHYSICAL MODEL
                  NO. 2)?

              UPOK=1

                              ┌─S13                      ┌─S14
┌──────────────────────────────────┐   ┌──────────────────────────┐
│       UPGRADE PERFORMED           │   │    UPGRADE WITHHELD       │
└──────────────────────────────────┘   └──────────────────────────┘
```

# FIG. 11

ΔModel

CORRECTION

NEW

A'

PHYSICAL MODEL NO. 2

COMPARISON

[DATA MANAGEMENT FOR PRODUCT AND MATERIAL]

[ACTUAL CAR (PHYSICAL OBJECT) ENVIRONMENT]

OPERATION COMMAND

NEW

A'

ACTUAL CAR NO. 2

OPERATION DATA
(VELOCITY, TEMPERATURE, VIBRATION, OPERATION TIME)

# FIG. 12

CHANGE (A -> A') OF FUNCTION OF ACTUAL CAR NO. 1: ACTUAL CAR NO. 2 ~S21

CORRECT PHYSICAL MODEL ACCORDING TO $\Delta$ Model ~S23

COMPARE DIFFERENCE IN OPERATION DATA BASED ON OPERATION COMMAND OF ACTUAL CAR

$\Delta$ Model = OPERATION DATA (PHYSICAL MODEL NO. 2) − OPERATION DATA (ACTUAL CAR NO. 2)? ~S22

$|\Delta \text{Model}| > \gamma$

$|\Delta \text{Model}| \leq \gamma$

PHYSICAL MODEL NO. 2 IDENTIFICATION COMPLETED ~S24

# FIG. 13

EP 4 516 628 A1

# FIG. 14

COLLECT DATA OF ALL ACTUAL CARS NO. 1 IN OPERATION — S41

CORRECT PHYSICAL MODEL ACCORDING TO $\Delta$ Model — S43

COMPARE DIFFERENCE IN OPERATION DATA BASED ON OPERATION COMMAND OF ACTUAL CAR AT A PLURALITY (AT LEAST THREE OR MORE) OF CARS

$\Delta$ Model = OPERATION DATA (PHYSICAL MODEL NO. 1) – OPERATION DATA (ACTUAL CAR NO. 1)? — S42

Menteyo = 1 AT SPECIFIC CAR

Menteyo = 1 AT ALL CARS

Menteyo = 0

MAINTENANCE PERFORMED — S45

MAINTENANCE WITHHELD — S44

# FIG. 15

EP 4 516 628 A1

EP 4 516 628 A1

# FIG. 16

# FIG. 17

# FIG. 18

ID : 1-1,Li-ION BATTERY CELL ABC TYPE
α HISTORY INFORMATION
    SIZE, MASS, CHARACTERISTICS, USAGE HISTORY
β HIGHER-ORDER CONSTITUENT ELEMENT (PARENT)
    (ID : 1) STORAGE BATTERY MODULE YEAR 2022 MODEL
γ LOWER-ORDER CONSTITUENT ELEMENT (CHILD)
    (ID : 1-1-1) CELL CASE, AI,
    (ID : 1-1-2) CATHODE MATERIAL, $LiCoO_2$, 3g
    (ID : 1-1-3) ANODE MATERIAL, C(GRAPHITE), 2g
δ ASSOCIATED DATA
    SIZE : Data_ID1_size
    MASS : Data_ID1_mass
    CHARACTERISTICS : Data_ID1_chara
    USAGE HISTORY : Data_ID1_UsageHist

ID : 1
STORAGE BATTERY
MODULE
YEAR 2022 MODEL
α
β
γ
δ

ID : 1-1
Li-ION BATTERY CELL
ABC TYPE
α
β
γ
δ

ID : 1-2
MODULE CASE
ABC TYPE
α
β
γ
δ

ID : 1-3
CELL CONTROLLER
ABC TYPE
α
β
γ
δ

ID : 1-1-1
CELL CASE
α
β
γ
δ

ID : 1-1-2
CATHODE MATERIAL
α
β
γ
δ

ID : 1-1-3
ANODE MATERIAL
α
β
γ
δ

ID : 1-2-1
α
β
γ
δ

ID : 1-2-2
α
β
γ
δ

ID : 1-2-3
α
β
γ
δ

ID : 1-3-1
α
β
γ
δ

EP 4 516 628 A1

# FIG. 19

OPERATOR

**RAILWAY COMPANY (OPERATION DEPARTMENT)**
DESTINATION OF APPLICATION OF STORAGE BATTERY

STORAGE BATTERY STABLE OPERATION

UNIT MAINTENANCE AND REPLACEMENT

APPLICATION OF STORAGE BATTERY

REMOVAL/ CARRY-OUT | CARRY-IN/ INSTALLATION

UNIT TO BE MAINTAINED AND RECOVERED

MAINTAINED UNIT | OPERATION DATA | QUALITY DATA | DATE RESPONSE | MAINTENANCE PROPOSAL | RESULT CONFIRMATION | UNIT INSPECTION RESULT

STORAGE BATTERY DATA MANAGER

UNIT RECOVERY | UNIT SUPPLY

**UPCYCLE MEANS**

UNIT MAINTENANCE INSTRUCTION | UNIT INSPECTION RESULT | MODULE SPECIFICATIONS | ANALYSIS REPORT | UNIT SPECIFICATIONS | ANALYSIS REPORT | UNIT RECORD | ANALYSIS REPORT

STORAGE BATTERY HARDWARE MAINTENANCE

MODULE REGENERATION

STORAGE BATTERY MODULE UPCYCLE

CELL MATERIAL REGENERATION

MODULE SUPPLY
MODULE RECOVERY

UNIT ASSEMBLY

STORAGE BATTERY UNIT PRODUCTION

UNIT DISMANTLEMENT

UNIT SUPPLY
UNIT RECOVERY

STORAGE BATTERY HARDWARE MANAGEMENT

STORAGE BATTERY HARDWARE MAINTAINER

STORAGE BATTERY HARDWARE SUPPLIER

STORAGE BATTERY HARDWARE MANAGER

# FIG. 20

PLACE AND TIME OF COLLECTION ARE MADE DIFFERENT DEPENDING ON TYPE OF DATA
DETAILED DATA: COLLECT AT SPECIFIC PLACE AND TIME
OUTLINE DATA: MONITOR AT ALL TIMES

EP 4 516 628 A1

# FIG. 21

EP 4 516 628 A1

# FIG. 22

STORAGE BATTERY SYSTEM
(STORAGE BATTERY BOX)

CURRENT
DETECTION MEANS

STORAGE
BATTERY UNIT

CURRENT
CONTROL
MEANS

CONTROLLER

MODULE
MODULE
MODULE
MODULE
MODULE
MODULE

MODULE
MODULE
MODULE
MODULE
MODULE
MODULE

DC
PT

U

U

# FIG. 23

(a)

(b) [REQUIRED DATA]

| No. | ITEMS | REMARKS |
|---|---|---|
| 1 | TAG INFORMATION (TYPE, PRODUCT NUMBER) | PERIODICAL TRANSMISSION |
| 2 | UNIT SOH | EVERY 1s |
| 3 | MODULE SOH | |
| 4 | UNIT VOLTAGE | |
| 5 | UNIT CURRENT | |
| 6 | MODULE VOLTAGE | |
| 7 | MODULE CURRENT | |
| 8 | CELL VOLTAGE | |
| 9 | CELL CURRENT | |
| 10 | CELL/MODULE TEMPERATURE | |

EP 4 516 628 A1

# FIG. 24

ID : A-U1, STORAGE BATTERY UNIT, BTUT23
α HISTORY INFORMATION
  SIZE, MASS, CHARACTERISTICS, USAGE HISTORY
β HIGHER-ORDER CONSTITUENT ELEMENT (PARENT)
  (ID : 1) STORAGE BATTERY SYSTEM, BTSY23
γ LOWER-ORDER CONSTITUENT ELEMENT (CHILD)
  (ID : A-U1-MD11) STORAGE BATTERY MODULE
  (ID : A-U1-MD12) STORAGE BATTERY MODULE
  (ID : A-U1-MD21) STORAGE BATTERY MODULE
δ ASSOCIATED DATA
  SIZE : Data_BTUT23_size
  MASS : Data_BTUT23_mass
  CHARACTERISTICS : Data_BTUT23_chara
  USAGE HISTORY : Data_BTUT23_UsageHist

ID : A
STORAGE BATTERY
SYSTEM MODEL BTSY23
α
β
γ
δ

ID : A-U1
STORAGE BATTERY UNIT
MODEL BTUT23
α
β
γ
δ

ID : A-U2
STORAGE BATTERY UNIT
MODEL BTUT23
α
β
γ
δ

ID : A-U3
STORAGE BATTERY UNIT
MODEL BTUT23
α
β
γ
δ

ID : A-U1-MD11
STORAGE BATTERY
MODULE MODEL MT60HE
α
β
γ
δ

ID : A-U1-MD12
STORAGE BATTERY
MODULE MODEL MT60HE
α
β
γ
δ

ID : A-U1-MD21
STORAGE BATTERY
MODULE MODEL MT60HE
α
β
γ
δ

ID : A-U2-MD11
STORAGE BATTERY
MODULE MODEL MT60HE
α
β
γ
δ

ID : A-U2-MD12
STORAGE BATTERY
MODULE MODEL MT60HE
α
β
γ
δ

ID : A-U2-MD21
STORAGE BATTERY
MODULE MODEL MT60HE
α
β
γ
δ

ID : A-U3-MD11
STORAGE BATTERY
MODULE MODEL MT60HE
α
β
γ
δ

EP 4 516 628 A1

# FIG. 25

ID : *-MD11
STORAGE BATTERY
MODULE
MODEL MT60HE
$\beta$
$\gamma$
$\delta$

ID : *-MD11-1, Li-ION BATTERY CELL ABC TYPE
$\alpha$ HISTORY INFORMATION
  SIZE, MASS, CHARACTERISTICS, USAGE HISTORY
$\beta$ HIGHER-ORDER CONSTITUENT ELEMENT (PARENT)
  (ID : 1) STORAGE BATTERY MODULE YEAR 2022 MODEL
$\gamma$ LOWER-ORDER CONSTITUENT ELEMENT (CHILD)
  (ID : 1-1-1) CELL CASE, Al
  (ID : 1-1-2) CATHODE MATERIAL, LiCoO2, 3g
  (ID : 1-1-3) ANODE MATERIAL, C(GRAPHITE), 2g
$\delta$ ASSOCIATED DATA
  SIZE : Data_ID1_size
  MASS : Data_ID1_mass
  CHARACTERISTICS : Data_ID1_chara
  USAGE HISTORY : Data_ID1_UsageHist

ID : *-MD11-1
Li-ION BATTERY
CELL ABC TYPE
$\alpha$
$\beta$
$\gamma$
$\delta$

ID : *-MD11-2
MODULE CASE
ABC TYPE
$\alpha$
$\beta$
$\gamma$
$\delta$

ID : *-MD11-3
CELL CONTROLLER
ABC TYPE
$\alpha$
$\beta$
$\gamma$
$\delta$

ID : *-MD11-1-1
CELL CASE
$\alpha$
$\beta$
$\gamma$
$\delta$

ID : *-MD11-1-2
CATHODE MATERIAL
$\alpha$
$\beta$
$\gamma$
$\delta$

ID : *-MD11-1-3
ANODE MATERIAL
$\alpha$
$\beta$
$\gamma$
$\delta$

ID : *-MD11-2-1
$\alpha$
$\beta$
$\gamma$
$\delta$

ID : *-MD11-2-2
$\alpha$
$\beta$
$\gamma$
$\delta$

ID : *-MD11-2-3
$\alpha$
$\beta$
$\gamma$
$\delta$

ID : *-MD11-3-1
$\alpha$
$\beta$
$\gamma$
$\delta$

# FIG. 26

EP 4 516 628 A1

# FIG. 27

STORAGE BATTERY DATA MANAGER      STORAGE BATTERY HARDWARE MAINTAINER      OPERATOR

| STORAGE BATTERY DATA MANAGER | STORAGE BATTERY HARDWARE MAINTAINER | OPERATOR |
|---|---|---|
| ANALYZE OPERATION DATA — S702 | | OPERATE STORAGE BATTERY — S701 |
| INSTRUCT MAINTENANCE AND REPLACEMENT, INSTRUCT REPLACEMENT/SUBSTITUTE UNIT — S703 | PROPOSE MAINTENANCE AND REPLACEMENT TO CUSTOMER — S704 | SET REPLACEMENT EXECUTION DATE — S705 |
| | CONFIRM REPLACEMENT EXECUTION DATE — S707 | RESPOND REPLACEMENT EXECUTION DATE — S706 |
| | SEND SUBSTITUTE UNIT TO CUSTOMER — S708 | RECEIVE SUBSTITUTE UNIT — S709 |
| | | REMOVE REPLACEMENT UNIT, INSTALL SUBSTITUTE UNIT — S710 |
| | RECEIVE REPLACEMENT UNIT — S712 | RETURN REPLACEMENT UNIT — S711 |
| | INSPECT REPLACEMENT UNIT AND PRESENT INSPECTION RESULT — S713 | CONFIRM INSPECTION RESULT — S714 |
| RECORD COMPLETION OF MAINTENANCE AND REPLACEMENT — S717 | CONFIRM COMPLETION OF MAINTENANCE AND REPLACEMENT — S716 | APPROVE INSPECTION RESULT (WORK COMPLETION) — S715 |
| INSTRUCT MODULE REPLACEMENT — S718 | CONFIRM MODULE REPLACEMENT INSTRUCTION — S719 | |
| | REPLACE MODULE, INSPECT UNIT — S720 | |
| RECORD STORAGE COMPLETION — S722 | COMPLETE MODULE REPLACEMENT — S721 | |

☐ : ACCESSING UPCYCLE MEANS

EP 4 516 628 A1

# FIG. 28

EP 4 516 628 A1

| | INTERNATIONAL SEARCH REPORT | International application No. |
|---|---|---|
| | | **PCT/JP2023/016960** |

**A. CLASSIFICATION OF SUBJECT MATTER**

*B61L 27/60*(2022.01)i; *B60L 3/00*(2019.01)i; *G01M 17/08*(2006.01)i; *G06Q 10/30*(2023.01)i
FI: B61L27/60; B60L3/00 N; G01M17/08; G06Q10/30

According to International Patent Classification (IPC) or to both national classification and IPC

**B. FIELDS SEARCHED**

Minimum documentation searched (classification system followed by classification symbols)

B61L27/60; B60L3/00; G01M17/08; G06Q10/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-041321 A (MITSUBISHI ELECTRIC CORP) 17 February 2005 (2005-02-17) paragraphs [0003]-[0039], fig. 1-6 | 1-33 |
| A | JP 2022-065636 A (INTERNATIONAL BUSINESS MACHINES CORPORATION) 27 April 2022 (2022-04-27) paragraphs [0014]-[0018] | 1-33 |
| A | JP 2019-114450 A (TOYOTA MOTOR CORP) 11 July 2019 (2019-07-11) paragraphs [0033]-[0132], fig. 1-13 | 1-33 |
| A | JP 2010-215158 A (TOSHIBA CORP) 30 September 2010 (2010-09-30) entire text, all drawings | 1-33 |
| A | JP 2020-166928 A (HONDA MOTOR CO LTD) 08 October 2020 (2020-10-08) entire text, all drawings | 1-33 |
| A | JP 2020-061335 A (GS YUASA CORP) 16 April 2020 (2020-04-16) entire text, all drawings | 1-33 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/016960**

| Patent document cited in search report | | | Publication date (day/month/year) | Patent family member(s) | Publication date (day/month/year) |
|---|---|---|---|---|---|
| JP | 2005-041321 | A | 17 February 2005 | (Family: none) | |
| JP | 2022-065636 | A | 27 April 2022 | US 11200045 B1<br>column 2, line 39 to column 3, line 27<br>GB 2600820 A<br>DE 102021123135 A1<br>CN 114371857 A | |
| JP | 2019-114450 | A | 11 July 2019 | US 2019/0195953 A1<br>paragraphs [0043]-[0142], fig. 1-13<br>CN 109962303 A | |
| JP | 2010-215158 | A | 30 September 2010 | (Family: none) | |
| JP | 2020-166928 | A | 08 October 2020 | US 2020/0307413 A1<br>entire text, all drawings<br>CN 111755762 A | |
| JP | 2020-061335 | A | 16 April 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180257683 A1

**Non-patent literature cited in the description**

- Robust Adhesion Control. *the 41st Cybernetics Utilization Symposium in Railway Proceedings*, November 2004